# EUROPEAN PATENT APPLICATION

(11) **EP 4 799 512 A1**
(43) Date of publication of application: **02.09.2026**
(21) Application number: 26161121.4
(22) Date of filing: 26.02.2026
(51) Int. Cl.: A43B 1/028, A43B 23/02, B33Y 80/00, B33Y 10/00, B33Y 50/00

(54) **METHOD AND SYSTEM FOR MANUFACTURING A TEXTILE FOOTWEAR UPPER**

(30) Priority: 28.02.2025 CH 1912025; 31.07.2025 EP 25192998
(71) Applicant: On Clouds GmbH, 8005 Zürich (CH)
(72) Inventor: ZHELIAZKOVA, Maia Evgenieva, 8005 Zürich (CH); ZHILYAEV, Igor, 8005 Zürich (CH)
(74) Representative: Eichelhardt, Frank Robert

(57) **Abstract**

The invention relates to a method for manufacturing a textile footwear upper (12, 112, 212, 312, 412) for a bespoke article of footwear (78, 178, 278, 378), comprising the steps of: obtaining a movement pattern of an individual, in particular of an individual's foot (11); and applying, based on the movement pattern, a thermoplastic filament (18) onto a footwear last (22, 122, 222) to form a plurality of path segments (24), in particular loops (26), on the footwear last (22, 122, 222) along an application path (28, 128), thereby at least partially forming the textile footwear upper (12, 112, 212, 312, 412). Furthermore, the invention relates to a manufacturing system (10) for manufacturing a bespoke article of footwear (78, 178, 278, 378), the manufacturing system (10) being configured to execute such a method.

## Description

### Technical Field

The present invention relates to a method for manufacturing footwear uppers for a bespoke article of footwear, to bespoke articles of footwear, in particular sports and/or leisure shoes, each having a textile footwear upper manufactured by such a method and a sole unit connected to the textile footwear upper. Furthermore, the present invention pertains to a manufacturing system for manufacturing textile footwear uppers, the manufacturing system being configured to execute such a method.

### Background

Footwear manufacturing has continuously evolved to meet the demands of performance, comfort, and sustainability. The need for high-quality shoes that offer durability, flexibility, breathability, and lightweight construction has driven innovation in production techniques. Traditional methods of manufacturing footwear involve knitting, weaving, or using cut-and-sew techniques, which can result in material waste and require extensive labor. Recent innovations have sought to improve efficiency, reduce waste, and enhance the performance characteristics of these products.

Emerging techniques enable the direct application of material onto a substrate, allowing for controlled deposition of functional layers. This approach facilitates the creation of lightweight, seamless, and high-performance footwear components with improved breathability and durability while minimizing material waste.

WO 2022/069583 A1 discloses a method for producing a textile material, in particular a shoe upper, by applying a molten thermoplastic filament onto a shoe last to form the textile material with a plurality of superimposed loops. Herein, the thermoplastic filament is ejected from a filament discharge nozzle in a molten state as a helical strand and applied to the shoe last.

Existing methods for constructing footwear often involve multiple steps and separate material components, which can lead to inefficiencies in production and variability in product performance. Advanced material application techniques address these challenges by streamlining the manufacturing process and offering greater design flexibility.

Despite these advancements, there remains a need for further individualization, refinement and optimization of these techniques. This involves improving the performance of the products while also increasing flexibility in production processes and product properties, allowing for more precise control over characteristics such as durability, usability and individual fit.

This includes the ability to customize shape and/or fit, material composition, texture, breathability, elasticity, and structural support while also ensuring scalable and cost-effective production methods that meet the evolving demands of the industry, all while minimizing environmental impact and promoting sustainable practices throughout the production cycle.

### Summary

The invention relates to a method for manufacturing a textile footwear upper for a bespoke article of footwear, comprising the steps of: obtaining a movement pattern of an individual, in particular of an individual's foot; and applying, based on the movement pattern, a thermoplastic filament onto a footwear last to form a plurality of path segments, in particular loops, on the footwear last along an application path, thereby at least partially forming the textile footwear upper, in particular a base footwear upper of the textile footwear upper.

Furthermore, the invention concerns a bespoke article of footwear, in particular a sports and/or leisure shoe, comprising a textile footwear upper being manufactured by such a method; a sole unit connected to the textile footwear upper.

Further still, the invention pertains to a manufacturing system for manufacturing such a bespoke article of footwear, the manufacturing system being configured to execute a method as disclosed herein. The manufacturing system may be configured to connect a sole unit and the textile footwear upper to each other.

Through this, a method and system for manufacturing a textile footwear upper and for manufacturing an article of footwear can be refined and/or optimized, in particular individualized. The performance of the final products can be improved while increasing flexibility during production and with respect to product properties. Precise control over product characteristics such as flexibility, cushioning, durability, and/or usability can be achieved. A wide range of customizations can be made possible, in particular regarding material density, texture, elasticity, breathability, and structural support. Yet still, scalable, cost-effective, streamlined, and/or fully automated production methods can be enabled.

It should be understood that the method may comprise additional steps apart from those mentioned above.

The article of footwear may be, for example, a sports shoe, in particular a running shoe, a marathon shoe, a tennis shoe, a soccer shoe, a football shoe, an athletics shoe, and/or a climbing shoe, a hiking shoe, a skating shoe, a dancing shoe, a leisure shoe, a sneaker, and so on.

The same type of sole unit may be used for different bespoke articles of footwear for individuals. However, there may be a choice of a sole unit out of a set of different types of sole units. For each size and/or side, i.e. left or right, a set of sole units may exist to choose from.

The textile footwear upper may be custom-made for each individual. The sole unit may have portions facing the interior of the article of footwear, that may be slightly re-shaped by heating after the article of footwear is finished in order to improve fit, as is known in the art, for example from ski shoes.

The sole unit may be joined to the textile footwear upper by any applicable method, for example, by glueing, stitching, or directly molding to a lower part and/or surface of the textile footwear upper. Furthermore, for connecting the sole unit to the textile footwear upper, the sole unit may be pre-assembled, pre-printed, and/or pre-molded, then affixed to the footwear last, heated at least in part, in particular where the sole unit is supposed to contact the textile footwear upper, and finally joined to the textile footwear upper while applying the thermoplastic filament onto the footwear last by providing the thermoplastic filament not only onto the footwear last but also at least onto a side of the sole unit.

The textile footwear upper may be a sheet element having a thickness, in particular a maximum thickness, being at least 10 times, preferably at least 50 times and most preferably at least 100 times, smaller than its width and/or length. The maximum thickness of the textile footwear upper may be at least 0.1 mm, at least 0.2 mm, or at least 0.3 mm. The maximum thickness of the textile footwear upper may be at most 5 mm, at most 4 mm, or at most 3 mm. The textile footwear upper may have a non-uniform thickness, and may include at least one thickening, like, for example, a cushioning, a padding and/or a plating, and/or at least one thinning, like a flexible zone and/or a ventilation zone.

The step of obtaining the movement pattern may also comprise obtaining only a rough pattern of a movement of the individual, in particular of the individual's foot, for example obtaining the movement pattern while the individual is wearing socks or other clothes. Furthermore, movement of individual body parts of the individual, in particular of toes, may be ignored and/or replaced by a different movement pattern.

The step of obtaining the movement pattern may also comprise obtaining a movement pattern of at least one body part of the individual different to the individual's foot, for example a torso, a leg, a head, another foot and/or an arm of the individual. Accordingly, data may be derived from the movement of the different body part and used for the forming of the textile footwear upper. This allows to individualize the textile footwear upper, even without or in addition to a movement pattern of the individual's foot. In addition, it may allow individualizing the footwear upper based on a movement pattern that cannot be derived from the movement pattern of the foot. For example, a movement pattern of an individual's leg and/or hip may be obtained and said movement pattern may indicate an abnormal movement of the leg and/or hip. Ideally, the abnormal movement can be at least partly compensated when forming the textile footwear upper. For example, the thermoplastic filament may be applied based on said movement pattern to compensate the abnormal movement. Similarly, a torso movement could be obtained and an abnormal torso movement could then be compensated.

The step of obtaining the movement pattern may comprise scanning a movement of the individual. The movement of the individual may be a movement of an individual's foot, preferably a movement of the foot while running, further preferably a movement of the foot while running on a sporting equipment. The sporting equipment may be a treadmill. Thus, a fast, efficient, reliable and/or comfortable method for scanning the individual, in particular the foot can be provided. In particular, usable data, in particular 3D data, of the movement pattern can be made readily available for subsequent processing, for example for 3D printing of the footwear last and/or for application of the thermoplastic filament and/or for storing for later use.

Scanning the foot may comprise using a scanner to scan the movement pattern of the individual, in particular of the individual's foot, and to obtain the movement pattern of the individual, in particular, preferably digital, data representative of the movement pattern. The scanner may be any type of scanner known to the skilled person and deemed to be applicable.

The data provided by the scanner may be converted and/or edited by any algorithm imaginable and provided as the, preferably digital, data representative of the movement pattern. In particular editing the data may comprise translating the movement into an appropriate movement pattern, simplifying the movement to achieve an appropriate movement pattern, completing the movement to achieve an appropriate movement pattern.

The scanner may be a contact 3D scanner, for example, comprising a probe which is mounted on a robotic arm and brought into contact with the individual's foot at a plurality of surface points and in a plurality of positions of the in foot, wherein positional data and thus the foot shape in a particular position or thus the movement pattern is derived from articulation data of the robotic arm. Preferably, however, the scanner is a non-contact 3D scanner.

The scanner, in particular the non-contact 3D scanner, may be an active non-contact 3D scanner, which may be configured to emit some kind of radiation to the wearer's foot when moving or when being in a particular movement position, like, for example, light or ultrasound, and which is configured to derive positional data and thus the foot shape from radiation reflected from the individual's foot. The scanner may be a 3D laser scanner, in particular a time-of-flight 3D laser scanner, a LIDAR scanner, a triangulation-based 3D laser scanner, and/or a conoscopic holography-based 3D laser scanner. Furthermore, the scanner may be a structured-light 3D scanner, which is configured to capture the movement by projecting a light pattern, such as, for example, a grid and/or stripes, onto the individual's foot and then taking a photo with at least one camera and preferably with several cameras from different points of view. Further still, the scanner may be a modulated light 3D scanner, which is configured to illuminate the individual's foot with a continually changing light pattern, in particular light amplitude, and detect the reflected light pattern and the amount the patterns are shifted with respect to each other. The scanner may also be an ultrasound-based 3D scanner.

The scanner, in particular the non-contact 3D scanner, may be a passive non-contact 3D scanner which may be configured to detect reflected ambient radiation. The scanner may be or comprise a stereoscopic camera, or may be based on a silhouette technique. Furthermore, the scanner may be a photogrammetry scanner which may comprise a multitude of different cameras and/or a moving camera configured to take pictures of the individual's foot from different points of view.

The scanner may be a hand-held, in particular a hand-held laser scanner, or stationary. In further embodiments, yet not preferred due to health issues, regulations, and/or costs, the scanner may be a computed tomography (CT) scanner or a magnetic resonance imaging (MRI) scanner.

The scanner may be configured to capture a moving image and/or plural images of the individual, in particular the individual's foot. The scanner may be a video camera capturing non-colored or colored images.

For obtaining the movement pattern, also multiple scanners, as disclosed herein, working together could be envisaged.

The step of obtaining the movement pattern may comprise analyzing image data, in particular moving image data, of the individual. Preferably, the image data comprises a first image of the individual in a first running position and a second image of the individual in a second running position different to the first running position. The image data may be generated by one or plural scanners as disclosed herein. The image data may represent one or plural images of the individual, in particular the individual's foot in a particular movement and/or position of the movement. Another term for position of the movement is running position or movement position.

The image data may be analyzed by comparing the image data to at least one reference image data, by reducing the image data and/or by simplifying the image data. The image data may be analyzed by a software for a computer or a mobile computing device, such as a smartphone.

The movement pattern may be indicative of at least one area of specific load on the individual's foot. Furthermore, the movement pattern may be indicative of specific deformation of the individual's foot during a movement. The specific load may be a load higher or lower than a reference load on the foot. The specific deformation may be a deformation different to, more than or less than a reference deformation of the foot. The reference load and/or reference deformation may be derived from a foot model and/or medical foot data. The specific load and/ort the specific deformation may be induced by a malposition of the individual, in particular the individual's foot, and/or an abnormal movement of the individual, in particular the individual's foot. A malposition of the foot may occur when the shape or the structure of the foot deviates from a normal anatomic position. The malposition can be a congenital or be developed over time due to various factors like injury, lifestyle, or genetic predisposition.

The term "movement pattern" as used herein may be understood as any data representing a pattern of the individual, in particular its foot, related to the movement of the individual, in particular its foot. In an example, the movement may be based on a certain position of the movement of the individual, based on a set of positions of the movement of the individual.

The method may further comprise the step of: deriving load and/or deformation data from the movement pattern for forming the textile footwear upper, wherein the load and/or deformation data is indicative of at least one area of specific load on and/or specific deformation of the individual's foot.

In an area of high deformation, the textile footwear upper may be formed to achieve a high flexibility. In an area of high load, the footwear upper may be formed stiffer, thicker and/or with a cushioning.

The at least one area of specific load may comprise an area of increased load on the foot and/or at least one area of reduced load on the foot and/or at least one area of malposition of the foot and/or at least one area of specific movement of the foot.

The at least one area of specific deformation of the individual's foot comprises an area of increased deformation of the foot and/or at least one area of reduced deformation of the foot and/or at least one area of malposition of the foot and/or at least one area of specific movement of the foot.

The specific movement may be an abnormal anatomic movement. Ideally, the specific movement can be compensated by creating a specific property in the at least one area of specific load and/or the area of specific deformation.

The area of specific load and/or the area of specific deformation may indicate a specific area of the specific load.

The step of deriving load and/or deformation data may comprise comparing the movement pattern to at least one reference movement pattern. The at least one reference movement pattern may be based on experience data, in particular medical experience data. The experience data may comprise data of other individuals.

The step of deriving load and/or deformation data may comprise analyzing the movement pattern using an artificial intelligence. The artificial intelligence may comprise machine learning and/or deep learning.

The method may comprise the step of: creating filament application data for forming the textile footwear upper, wherein when creating the filament application data, the movement pattern is considered. It should be noted that, in principle, it would be conceivable that applying the thermoplastic filament onto the footwear last is performed without any filament application data but merely by identifying the relative pose, i.e. position and/or orientation, of the footwear last with respect to a filament discharge unit, in particular a filament discharge nozzle of the filament discharge unit, and then applying the thermoplastic filament evenly over the appropriate surface of the footwear last by scanning over the footwear last with constant application speed and constant spacing of neighboring sections of the application path. However, using filament application data while applying the thermoplastic filament onto the footwear last allows for a more precise, efficient, reliable, and/or flexible deposition of the thermoplastic filament.

Herein, when creating the filament application data, the movement pattern may be considered. Through this, deposition characteristics of the thermoplastic filament can be improved. In particular, not only the general shape of the textile footwear upper can be defined by the footwear last but also more specific shapes and properties can be set in certain areas of the footwear last.

Depending on the movement pattern at least one specific area of the textile footwear upper may be provided with at least one specific property.

When creating the filament application data, the load and/or deformation data may be considered. For example, in an area of high deformation, the filament application data may be created such that filament is applied to achieve a high flexibility for the textile footwear upper. In an area of high load, the filament application data may be created such that filament is applied to achieve a stiffer and/or thicker textile footwear upper and/or a textile footwear upper with a cushioning.

Furthermore, when creating the filament application data, a user preference may be considered. Thus, a further diversification and/or individualization can be achieved.

The user preference may be a sport and/or an activity the article of footwear is supposed to be used for. The user may, for example, be able to choose certain sports and/or activities, like "tennis", "running", "hiking", etc. Based on that choice the filament application data may be edited and/or updated. The user preference may be a preference regarding at least one property in at least one specific area. For example, the user preference may be an increased cushioning in a heel section due to increased tendency of the individual to form blisters there. However, any other user preference may also be conceivable, for example an increased stiffness in an ankle section, in particular due to an earlier ligament injury of the individual in this region. The user preference may also be a specific aesthetic effect. Furthermore, the, preferably digital, data representative of the movement pattern may also be edited and/or updated based on the user preferences, for example, if the individual prefers a generally loose sitting article of footwear. The user may be able to choose one or several particular movements that the individual intends to make with the article of footwear. For example, when it is intended to jump, a different movement may be involved compared to running, standing or climbing.

The user preference may be input via a user interface of, for example, a personal computer, a mobile device and/or a manufacturing station, in particular being part of the manufacturing system. The user preference may be input before or after obtaining the movement pattern and/or before or after creating the footwear last. The user preference may also be changed later after it has been entered earlier.

Furthermore, it may be conceivable to implement a rating system which may allow the individual to rate the article of footwear, in particular regarding comfort and/or fit. This rating may be used for automatically choosing and/or proposing filament application data for manufacturing of future articles of footwear, in particular not only for the individual but also for other individuals. Thus, a self-learning and/or self- adjusting system may be implemented.

The step of applying the thermoplastic filament onto the footwear last comprises varying, based on the filament application data, at least one application path parameter during application of the thermoplastic filament onto the footwear last for creating at least one specific property in at least one specific area of the textile footwear upper. Through this, the method and system can be further refined and/or optimized, in particular individualized. The performance of the final products can be improved while increasing flexibility during production and with respect to product properties. Precise control over product characteristics can be achieved. A wide range of customizations can be made possible.

The specific area of the textile footwear upper can be based on the at least one area of specific load on and/or specific deformation of the individual's foot. For example, the specific area of the textile footwear upper may be chosen to match the at least one area of specific load and/or specific deformation for the case that the textile footwear upper is worn on the individual's foot.

The term "application path parameter" as used herein may be understood as a parameter relating to the respective application path. The at least one application path parameter may be indicative of the relative movement of the filament discharge nozzle in relation to the footwear last and in particular to the footwear last.

The at least one application path parameter may comprise an application speed of applying the thermoplastic filament onto the footwear last along the application path, and/or an application speed of applying a second thermoplastic filament onto the base footwear upper and/or the thermoplastic filament along a second application path and/or an application speed of applying a third thermoplastic filament onto the base footwear upper and/or the thermoplastic filament and/or a second thermoplastic filament along a third application path. This allows easy control and/or setting of a density and/or flexibility and/or breathability of the textile footwear upper in certain sections of the textile footwear upper.

The application speed may be defined by the relative speed of the filament discharge nozzle with respect to the footwear last and/or with respect to the base footwear upper and/or the thermoplastic filament and/or the second thermoplastic filament. A higher application speed may yield a less dense and/or more flexible and/or more breathable region of the textile footwear upper. A lower application speed may lead to a denser and/or stiffer and/or less breathable region of the textile footwear upper.

Furthermore, the at least one application path parameter may comprise a course of the application path and/or a second application path and/or a third application path. This greatly increases flexibility when manufacturing textile footwear uppers. Furthermore, this allows creating specific and/or complex shapes, in particular for providing certain attributes in the at least one specific area.

The at least one application path parameter can comprise a density of the path segments, in particular the loops, and/or a density of neighboring applications paths. For example, the application path parameter may indicate the number of overlaps of the loop with other one or plural loops.

The method may comprise the step of: applying, based on the filament application data, a second thermoplastic filament onto the thermoplastic filament and/or the footwear upper for creating at least one specific property in at least one specific area, thereby at least partially forming the textile footwear upper. Through this, the method and system can be advantageously refined and/or optimized and/or individualized. The performance of the final products can be further improved with further increased flexibility during production and with respect to product properties. An even wider range of customizations can be enabled.

The textile footwear upper comprises the thermoplastic filament, and may comprise, in addition, the second thermoplastic filament and in some embodiments even a third thermoplastic filament, that may be applied at least partially on top of the thermoplastic filament and/or the second thermoplastic filament. The textile footwear upper may comprise even further filaments. Preferably all filaments are polymeric. In some embodiments the textile footwear upper may consist of a single, in particular uninterrupted, thermoplastic filament. In other embodiments, the textile footwear upper may consist of several separate thermoplastic filaments, that may, however, be fused to each other.

The thermoplastic filament may be deposited onto the footwear last so that a surface area covered by the thermoplastic filament corresponds to a surface area covered by the textile footwear upper, in particular thereby forming the base footwear upper. Alternatively, the thermoplastic filament may be deposited onto the footwear last so that a surface area covered by the thermoplastic filament is smaller than the surface area covered by the textile footwear upper.

The second thermoplastic filament may be deposited only in the at least one specific area or only in a plurality of such specific areas, for example to achieve a wadding in the specific area. There may be, in particular, areas of the base footwear upper and/or of the thermoplastic filament that are deliberately left uncovered by the second thermoplastic filament.

Furthermore, the thermoplastic filament may be deposited only in the at least one specific area or only in a plurality of such specific areas, which are separated from each other, and the second thermoplastic filament may be applied on top of the thermoplastic filament. The thermoplastic filament may be applied to the footwear last so that some areas of the footwear last are deliberately left uncovered by the thermoplastic filament, wherein these areas may at least partially be covered with the second thermoplastic filament. In doing so, the second thermoplastic filament may be deposited onto the footwear last and/or the thermoplastic filament so that a surface area covered by the second thermoplastic filament corresponds to the surface area covered by the textile footwear upper. Alternatively, the second thermoplastic filament may be deposited onto the footwear last and/or the thermoplastic filament so that a surface area covered by the second thermoplastic filament is smaller than the surface area covered by the textile footwear upper.

The at least one specific area may have a surface size of at most 80 %, at most 60 %, at most 40 %, at most 20 %, or at most 10 % of the total surface size of the textile footwear upper. The surface size of the at least one specific area may be at most 200 cm², at most 150 cm², at most 100 cm², or at most 50 cm².

The third thermoplastic filament may be at least partially applied onto the footwear last and/or on top of the thermoplastic filament and/or on top of the second thermoplastic filament. The third thermoplastic filament may be deposited onto the footwear last and/or the thermoplastic filament and/or the second thermoplastic filament so that a surface area covered by the third thermoplastic filament corresponds to the surface area covered by the textile footwear upper. Alternatively, the third thermoplastic filament may be deposited onto the footwear last and/or the thermoplastic filament and/or the second thermoplastic filament so that a surface area covered by the third thermoplastic filament is smaller than the surface area covered by the textile footwear upper. The third thermoplastic filament may in particular cover the second thermoplastic filament so that the thermoplastic filament and the third thermoplastic filament may form a pocket for the second thermoplastic filament. The third thermoplastic filament may be applied so as to constitute a preferably uninterrupted upper cover and/or outer cladding of the textile footwear upper.

The thermoplastic filament and/or the second thermoplastic filament and/or the third thermoplastic filament may be applied in a solid state onto the footwear last and/or onto an underlying layer of the thermoplastic filament and/or the second thermoplastic filament, and/or the third thermoplastic filament, and may be heated afterwards, for example by hot air blowing, heat irradiation, or any other applicable method, for fusing the thermoplastic filament and/or the second thermoplastic filament and/or the third thermoplastic filament with each other and/or with themselves.

Alternatively, and preferably, the thermoplastic filament and/or the second thermoplastic filament and/or the third thermoplastic filament may be applied in an at least partially molten and/or liquid state onto the footwear last and/or onto an underlying layer of the thermoplastic filament and/or the second thermoplastic filament and/or the third thermoplastic filament, the thermoplastic filament and/or the second thermoplastic filament and/or the third thermoplastic filament being hereby fused with each other and/or with themselves upon hardening. Before or while applying the thermoplastic filament and/or the second thermoplastic filament and/or the third thermoplastic filament, the footwear last and/or the respective underlying filament may be heated, in particular via a heating element integrated into the footwear last and/or via an external heating unit, for example a hot air blower, an IR-irradiation unit, a laser, or any other applicable heating unit.

The thermoplastic filament and/or the second thermoplastic filament and/or the third thermoplastic filament may be provided as strands, in particular continuous strands, preferably having a circular cross-section. During application and before fusing, the thermoplastic filament and/or the second thermoplastic filament and/or the third thermoplastic filament may have a maximum thickness of 10 µm to 1000 µm, of 50 µm to 500 µm, of 50 µm to 300 µm, or of 75 µm to 250 µm. Herein, the "maximum thickness" may be the maximum cross-sectional extension of the respective thermoplastic filament. If the respective thermoplastic filament has a circular cross-section, the maximum thickness is equal to the diameter of the respective thermoplastic filament.

In some embodiments the second thermoplastic filament may at least partly be applied as a plurality of, preferably partially superimposed, second path segments, in particular second loops, along a second application path in the at least one specific area. Thus, additional material can be provided in the at least one specific area in a controlled and/or ordered manner. In particular the additional materials can be provided at relatively high density for additional effects like strengthening, plating, etc.

Furthermore, the third thermoplastic filament may at least partly be applied as a plurality of, preferably partially superimposed, third path segments, in particular third loops, along a third application path in the at least one specific area. Thus, even more material can be provided in the at least one specific area in a controlled and/or ordered manner for increased or additional effects.

The path segments, in particular the loops, and/or the second path segments, in particular the second loops, and/or the third path segments, in particular the third loops, may advantageously be at least partially overlapping with each other and/or with themselves and may at least partially be located on top of each other. The path segment and/or the second path segments and/or the third path segments may be embodied as recurring patterns, in particular recurring loops, of the thermoplastic filament and/or the second thermoplastic filament and/or the third thermoplastic filament. By at least partially overlapping and fusing neighboring filament lines, the textile footwear upper may be shaped.

The textile footwear upper may be a laid textile sheet product. Herein, the path segments, in particular the loops, and/or the second path segments, in particular the second loops, and/or the third path segments, in particular the third loops, may not be inter-looped, entangled and/or chain linked with each other. The path segments, in particular the loops, and/or the second path segments, in particular the second loops, and/or the third path segments, in particular the third loops, are arranged partially on top of each other, i.e. stacked on each other, in particular along the application path and/or the second application path and/or the third application path.

The partially superimposed path segments, in particular loops, may be arranged along the application path one after another. At least some, or the majority, i.e. more than 50 %, or essentially all, of the superimposed segments, in particular loops, except the last path segment along the application path may be partially arranged underneath their next adjacently arranged segment, in particular loop. In other words, the superimposed path segments, in particular loops, may form a structure in which the path segments, in particular loops, partially overlap and in which starting from the first path segment, in particular loop, every path segment, in particular loop, except the last one is arranged partially underneath its next adjacent path segment, in particular loop. The same may be true for the second path segments, in particular second loops, and/or for the third path segments, in particular third loops, that are arranged along the second application path and/or the third application path, respectively.

Each partially superimposed path segment, in particular loop, except the last one, may be arranged along the filament path underneath their at least 2, at least 5, at least 10, or at least 15, next adjacently arranged path segments, in particular loops. Again, the same may be true for the second path segments, in particular second loops, that are arranged along the second application path and/or for the third path segments, in particular third loops, that are arranged along the third application path.

The thermoplastic filament and/or the second thermoplastic filament and/or the third thermoplastic filament may be parts of a common continuous thermoplastic filament. In certain embodiments, the continuous thermoplastic filament may form at least 100, in particular at least 1000, in particular at least 5000 path segments, in particular loops, and/or second path segments, in particular second loops, and/or third path segments, in particular third loops. The entire textile footwear upper may be formed of a single thermoplastic filament.

In some embodiments, the thermoplastic filament and/or the second thermoplastic filament and/or the third thermoplastic filament may have a length of at least at least 0.1 m, at least 1 m, at least 100 m, or at least 1000 m, or at least 1500 m. The thermoplastic filament and/or the second thermoplastic filament and/or the third thermoplastic filament may have a filament length of at most 10000 m, at most 5000 m, or at most 2500 m.

The loops and/or the second loops and/or the third loops may have any desired shape. For example, the loops and/or the second loops and/or the third loops may be round and particularly circular or oval, such as elliptic, or they can be polygonal. Preferably they are round. Partially superimposed loops are loops which are partially arranged on top of each other and thus partially overlap. However, the loops are not completely aligned with each other but offset to each other. In other words, the loops partially overlap with each other.

The thermoplastic filament and/or the second thermoplastic filament and/or the third thermoplastic filament may form a plurality of crossings along the application path and/or the second application path and/or third application path. At the crossings, the thermoplastic filament and/or the second thermoplastic filament and/or the third thermoplastic filament may contact each other and/or themselves, and may form a material-bonded, in particular fused, connection, in particular devoid of any additional, i.e. external adhesive.

In some embodiments, the textile footwear upper may have a filament crossing density of at least 100 crossings per cm², at least 200 crossings per cm², at least 300 crossing per cm², at least 400 crossings per cm², at least 500 crossings per cm², at least 600 crossings per cm², or at least 700 crossings per cm². The textile footwear upper may have a filament crossing density of less than 10000 crossings per cm², less than 5000 crossings per cm², or less than 3000 crossings per cm². Herein, the number of crossings may be derived from a microscopic image of the textile footwear upper.

If the path segments are embodied as loops, the second path segments as second loops and the third path segments as third loops, each loop and/or second loop and/or third loop except the first and last ones along the respective application path, may have a crossing number of at least 10, at least 20, at least 30, at least 50, at least 100, or at least 200. Herein, the "crossing number" is the number of crossings formed at different positions when staring at any crossing of the corresponding loop and counting the number of crossings formed by this loop with other loops until one comes back to the crossing of this loop at which one has started.

A higher crossing density can provide an increased stability, in particular tearing strength, as any occurring forces are well distributed over many crossings. Furthermore, forces can be efficiently transmitted through the textile footwear upper.

At the crossings, an upper filament section of the thermoplastic filament and/or the second thermoplastic filament and/or the third thermoplastic filament, which has been applied later, may at least partly be sunken into an underlying lower filament section of the thermoplastic filament and/or second thermoplastic filament and/or the third thermoplastic filament, which has been applied earlier.

The textile footwear upper may have a path segment density, in particular a loop density, of 0.5 to 15 path segments, in particular loops, per cm², 0.7 to 10 path segments, in particular loops, per cm², or 0.7 to 5 path segments, in particular loops, per cm². The textile footwear upper may have a second path segment density, in particular a second loop density, of 0.5 to 15 second path segments, in particular second loops, per cm², 0.7 to 10 second path segments, in particular second loops, per cm², or 0.7 to 5 second path segments, in particular second loops, per cm². The textile footwear upper may have a third path segment density, in particular a third loop density, of 0.5 to 15 third path segments, in particular third loops, per cm², 0.7 to 10 third path segments, in particular third loops, per cm², or 0.7 to 5 third path segments, in particular third loops, per cm². As used herein, the "path segment density", respectively the "loop density", may be the number of path segments, in particular of loops, being formed by the respective thermoplastic filament per cm². Herein, the respective path segment density, in particular the respective loop density, may be derived from a microscopic image of the textile footwear upper.

In case the path segments are loops, each loop formed by the thermoplastic filament may define a maximum clear distance of 5 mm to 50 mm, of 5 mm to 40 mm, or of 5 mm to 30 mm. Herein, the "maximum clear distance" may be the maximum length of a straight line extending through the center of the loop through the open area defined by the inner periphery of the thermoplastic filament forming the loop. If the loop is circular, for example, the maximum clearing distance is equal to the inner diameter of the loop. The same may be true for the second path segments being second loops and/or the third path segments being third loops.

A higher maximum clear distance can provide lower weight, higher flexibility, and/or increased breathability.

The thermoplastic filament and/or the second thermoplastic filament and/or the third thermoplastic filament may be provided as strands from a filament discharge nozzle, in particular the aforementioned filament discharge nozzle, wherein the plurality of path segments, in particular loops, and/or the plurality of second path segments, in particular second loops, and/or the plurality of third path segments, in particular third loops, may be formed by a relative movement and/or tilting of the filament discharge nozzle with respect to the footwear last, in particular the footwear last. The filament discharge nozzle may be fixed and the footwear last may be robotically moved in order to form the plurality of path segments, in particular loops, and/or the plurality of second path segments, in particular second loops and/or the plurality of third path segments, in particular third loops. However, the opposite arrangement and motion would also be conceivable.

The filament discharge unit may comprise a plurality of gas discharge nozzles for discharging a gas, in particular air, arranged laterally from the filament discharge nozzle of the filament discharge unit for discharging the thermoplastic filament and/or the second thermoplastic filament and/or the third thermoplastic filament. The gas discharge nozzles may be, advantageously evenly, arranged around the filament discharge nozzle and may be angled with respect to a discharge direction of the filament discharge nozzle, in particular in order to form the ejected thermoplastic filament and/or the second thermoplastic filament and/or the third thermoplastic filament into a helix with increasing diameter as the distance from the filament discharge nozzle increases. In this case the application path and/or the second application path and/or the third application path may be scanned by a relative movement of the filament discharge nozzle with respect to the footwear last, whereas the path segments, in particular the loops, and/or the second path segments, in particular the second loops, and/or the third path segments, in particular the third loops, may be formed by the helical discharge of the thermoplastic filament and/or second thermoplastic filament and/or third thermoplastic filament from the at least one filament discharge nozzle. Herein, the filament discharge nozzle may be fixed and the footwear last may be robotically moved in order to drive along the application path and/or the second application path and/or the third application path. A filament discharge unit having gas discharges nozzles and a deposition method as disclosed herein are also described in WO 2022/069583 A1. Here again, the opposite arrangement and motion of filament discharge nozzle and footwear last would be conceivable, too.

In some embodiments, the molten thermoplastic filament and/or second thermoplastic filament and/or third thermoplastic filament may be ejected from the filament discharge nozzle with a velocity of at least 0.1 m/s, at least 0.5 m/s, or at least 0.7 m/s. The molten thermoplastic filament and/or second thermoplastic filament and/or third thermoplastic filament may be ejected from the filament discharge nozzle with a velocity of at most 10 m/s, at most 5 m/s, or at most 1 m/s.

The thermoplastic filament and/or the second thermoplastic filament and/or the third thermoplastic filament may be provided with changing, in particular gradual or abrupt changing, color along its length. Changing the color of the thermoplastic filament and/or the second thermoplastic filament and/or the third thermoplastic filament may be achieved by changing a color of a material composition and/or a coloring agent in the extruder and/or the filament discharge nozzle, while applying the thermoplastic filament and/or the second thermoplastic filament and/or the third thermoplastic filament. Alternatively or additionally, the color of the thermoplastic filament and/or the second thermoplastic filament and/or the third thermoplastic filament may be changed by using at least two separate extruders, each containing a material composition of different color, and switching between the extruders for providing one of the material compositions to a common filament discharge nozzle. Further still, two filament discharge nozzles may be used, each supplied by its own extruder containing a material composition of specific color.

The method may further comprise the step of: fixing at least one first element to the footwear last and/or to the thermoplastic filament for creating at least one specific property in at least one specific area of the textile footwear upper, thereby at least partially forming the textile footwear upper, wherein the fixing is based on the movement pattern and/or the load and/or deformation data. The fixing can be based on the movement pattern in the same or similar as explained for the step of applying, based on the movement pattern, a thermoplastic filament, and/or for the step of creating filament application data, and/or for the step of applying a second thermoplastic filament. Since the fixing is based on the movement pattern, the characteristics of the first element can be used to create the at least one specific property in the at least one specific area of the textile footwear upper.

When speaking of the thermoplastic filament, it may be any of the mentioned thermoplastic, also the second and/or the third thermoplastic filament. Furthermore, it may be understood that not only at least one first element, but also at least one second or any further element may be fixed to the footwear last and/or to the thermoplastic filament and/or the at least one first element for creating at least one specific property in at least one specific area of the textile footwear upper.

The specific area of the textile footwear upper can be based on the at least one area of specific load on and/or specific deformation of the individual's foot. For example, the specific area of the textile footwear upper may be chosen to match the at least one area of specific load and/or specific deformation for the case that the textile footwear upper is worn on the individual's foot.

The at least one first element may be temporarily fixed to the footwear last and/or to the thermoplastic filament, for example by glueing, in particular making the at least one first element slightly tacky, magnetically, by negative pressure, and/or mechanically. The footwear last and/or to the thermoplastic filament may have at least one recess for at least partly and possibly completely receiving the at least one first element, in particular thereby holding the at least one first element at the shaping carrier.

The at least one first element may be connected to the footwear last and/or to the thermoplastic filament by any applicable method, for example by glueing and/or stitching. Thus, the at least one first element may be made part of the finished apparel part.

However, the at least one first element may be removed from the footwear last and/or to the thermoplastic filament after application of the thermoplastic filament and/or the first thermoplastic filament and in particular after finishing the textile footwear last. Hereby, a shape of the finished footwear last can differ from a shape of the footwear last and/or to the thermoplastic filament. This can increase design flexibility and/or enable increased customization.

Preferably the at least one first element is fused to the thermoplastic filament and/or the first thermoplastic filament, in particular by at least partly melting the at least one first element, the thermoplastic filament and/or the first thermoplastic filament. Through this, a quickly and effectively established and/or reliable connection between the at least one first element and the thermoplastic filament and/or the first thermoplastic filament can be provided.

Most advantageously, the at least one first element is fused with the thermoplastic filament and/or the first thermoplastic filament when the thermoplastic filament and/or the first thermoplastic filament is applied onto the footwear last and the at least one first element in partly molten form. Thereby, a connection can be established most effectively, in particular without a separate connecting step.

The at least one first element may be or may comprise a passive element, like, for example, a textile, a patch, a pad, possibly comprising a machine-readable code, in particular an optically readably code, for example a bar- or QR-code, a padding, a cushioning, a reflective element, a cord, a shoelace, a collar, a cuff, a lug, a tongue, and/or a flap. The at least one first element may be or may comprise an active element, like, for example, an RFID-tag, a tracker, and/or a lighting element.

The at least one specific area may comprise an outer side section, an instep section, a heel section, a toe section, a trim section and/or an ankle section. The trim section may be used for trimming the footwear upper or the bespoke article of footwear to the individual's foot, such as a lace section, a hook and loop fastener section. Through this, specific and/or critical sections of a wearer's foot can be advantageously addressed by providing specific properties in these sections.

The at least one specific area may form a closed patch on the base footwear upper and/or the thermoplastic filament and/or the second thermoplastic filament and/or the third thermoplastic filament. Herein, the at least one specific area and/or patch may be in any conceivable shape, in particular depending on the intended purpose and/or wearer. The at least one specific area and/or patch may, for example, be oblong or may comprise convex and concave outer contour sections. Furthermore, the at least one specific area may be an area that completely encloses at least one region that remains uncovered by the thermoplastic filament and/or the second thermoplastic filament and/or the third thermoplastic filament. In particular, the at least one specific area may enclose, for example, a foot entry portion of the textile footwear upper, in particular like a collar.

The at least one specific property may comprise a strengthening and/or stiffening. Thus, specific areas of the textile footwear upper and/or the article of footwear can be strengthened and/or stiffened for meeting specific demands.

The strengthening and/or stiffening in the at least one specific area may be achieved by applying the thermoplastic filament and/or the second thermoplastic filament and/or the third thermoplastic filament and/or the at least one first element specifically in that area. The strengthening and/or stiffening may furthermore be achieved by fixing the thermoplastic layer and the second thermoplastic layer to each other in the at least one specific area. Further still, the application speed for applying the thermoplastic filament and/or the second thermoplastic filament and/or the third thermoplastic filament may be lowered in the at least one specific area in order to increase deposition density and therefore strength and/or stiffness. Alternatively, or additionally, sections of the second application path may be angled with respect to sections of the first application path and/or sections of the third application path in the at least one specific area. Furthermore, the thermoplastic filament and/or the second thermoplastic filament and/or the third thermoplastic filament may be applied in the at least one specific area with a higher layer thickness and/or by deliberately choosing a specific course of the respective application path in the at least one area in order to increase strength and/or stiffness.

If the textile footwear upper is for a tennis shoe, a soccer shoe, a football shoe, etc., the outer side section may be stiffened and/or strengthened in order to better absorb lateral forces when changing directions. Furthermore, the toe section and/or the ankle section may be strengthened and/or stiffened to protect the wearer's toes, for example for climbing shoes, and/or ankle, in particular for hiking shoes. Further still, strengthening and/or stiffening of the instep section or the trim section may be contemplated.

The at least one specific property may comprise a cushioning. Thus, specific areas of the footwear upper and/or the article of footwear can be cushioned for meeting specific demands.

The cushioning in the at least one specific area may be achieved by applying the thermoplastic filament and/or the second thermoplastic filament and/or the third thermoplastic filament and/or the at least one first element specifically in that area, in the latter three cases in particular as a wadding. Furthermore, the application speed for applying the thermoplastic filament and/or the second thermoplastic filament and/or the third thermoplastic filament may be increased in the at least one specific area in order to decrease deposition density and therefore provide softness and/or flexibility. Furthermore, the thermoplastic filament and/or the second thermoplastic filament and/or the third thermoplastic filament may be applied in the at least one specific area with a higher layer thickness and/or by deliberately choosing a specific course of the respective application path in the at least one area in order to provide cushioning. For example, a separation distance between neighboring application paths of the thermoplastic filament and/or between neighboring second application paths of the second thermoplastic filament and/or between neighboring third application paths of the third thermoplastic filament may be increased in the at least one specific area.

In particular the heel section may be cushioned in order to increase the wearer's comfort. Regarding running and in particular marathon shoes, an instep section may alternatively or additionally be cushioned. For hiking shoes cushioning of the ankle section may be contemplated.

The at least one specific property may comprise a protective plating. Through this, specific areas of the textile footwear upper and/or the article of footwear may exhibit additional protection, in particular not only for the wearer but also for parts of the article of footwear and in particular for parts of the textile footwear upper which are located under the protective plating.

The protective plating may be achieved in the at least one specific area by applying the thermoplastic filament and/or the second thermoplastic filament and/or the third thermoplastic filament and/or the at least one first element specifically in that area. The protective plating may be characterized by a very dense deposition of the thermoplastic filament and/or the second thermoplastic filament and/or the third thermoplastic filament, in particular with relatively small and/or highly superimposed loops and/or second loops and/or third loops. This may be achieved by lowering the application speed for applying the thermoplastic filament and/or the second thermoplastic filament and/or the third thermoplastic filament in the at least one specific area. Thus, the protective plating may be watertight or at least essentially watertight. The protective plating may furthermore be achieved by fixing the thermoplastic layer and the second thermoplastic layer to each other in the at least one specific area. Alternatively, or additionally, sections of the second application path may be angled with respect to sections of the first application path and/or sections of the third application path in the at least one specific area. Furthermore, the thermoplastic filament and/or the second thermoplastic filament and/or the third thermoplastic filament may be applied in the at least one specific area with a higher layer thickness and/or by deliberately choosing a specific course of the respective application path in the at least one area in order to provide protective plating.

If the textile footwear upper is for a tennis shoe, a soccer shoe, a football shoe, etc., the outer side section may be plated in order to better protect this section of the textile footwear upper and/or the corresponding section of a wearer's foot. Furthermore, the toe section may be plated to protect the wearer's toes, for example for climbing shoes and/or hiking shoes and/or soccer or football shoes. Further still, protective plating of the instep section may be contemplated, in particular for soccer or football shoes.

The at least one specific property may comprise a higher flexibility and/or breathability. Thus, wearing comfort and/or performance of the article of footwear can be increased. Furthermore, entry can be facilitated.

Flexibility and/or breathability in the at least one specific area may be increased by keeping that area free from the second thermoplastic filament and/or the third thermoplastic filament and/or the at least one first element. Alternatively, the second thermoplastic filament and/or the at least one first element may be applied in that area as a wadding, and in neighboring areas as the plurality of the second path segments, in particular loops, for increased flexibility. Furthermore, the application speed for applying the thermoplastic filament and/or the second thermoplastic filament and/or the third thermoplastic filament may be increased in the at least one specific area in order to decrease deposition density and therefore provide increased flexibility and/or breathability. Further still, the thermoplastic filament and/or the second thermoplastic filament and/or the third thermoplastic filament may be applied in the at least one specific area with a lower layer thickness and/or by deliberately choosing a specific course of the respective application path in the at least one area in order to provide increased flexibility and/or breathability. For example, a separation distance between neighboring sections of the application path and/or between neighboring second sections of the second application path and/or between neighboring third sections of the third application path may be increased in the at least one specific area.

The instep section, the ankle section, and/or the heel section may have increased flexibility in order to increase the wearer's comfort and/or to facilitate entry of a wearer's foot. Regarding running shoes, in particular marathon shoes and/or athletics shoes, specific sections of the textile footwear upper may be provided with increased flexibility to improve performance.

The at least one specific property may comprise an aesthetic effect. Through this, an advantageously high design flexibility can be achieved. Different design features can easily be implemented, in particular by changing the application path and/or the second application path and/or the third application path, preferably with respect to each other, too. Furthermore, diversification can be facilitated, for example, by including the second thermoplastic filament as wadding in a specific area for a first type of footwear and by applying the second thermoplastic filament as a plurality of partially superimposed second loops in a corresponding area for a second type of footwear.

The at least one specific property may comprise an entrance enhancement. Thus, entrance of a wearer, in particular of a wearer's foot into the article of footwear, can be facilitated.

Various measures may be employed to provide entrance enhancement. For example, as already outlined, flexibility of the textile footwear upper may be increased in the at least one specific area. Furthermore, application of the second thermoplastic filament and/or the third thermoplastic filament as wadding may be envisaged. Further still, the thermoplastic filament may be applied as to form a thermoplastic layer, and the second thermoplastic filament may be applied as to form a second thermoplastic layer above the thermoplastic layer, and the second thermoplastic layer may be moveable relative to the thermoplastic layer in the at least one specific area in order to facilitate entry of a wearer in the vicinity of or next to the specific area.

In some embodiments a flap and/or tongue may be shaped while applying the thermoplastic filament and/or the second thermoplastic filament and/or the third thermoplastic filament onto the footwear last. Thus, advantageous properties regarding the entry of a wearer into the article of footwear, in particular of a wearer's foot into the article of footwear, can be obtained, in particular if the flap and/or tongue may be grabbed by a person during entry of the person's foot.

Herein, the flap and/or tongue may be a freestanding element of the article of footwear. The flap and/or tongue may be located at an instep section or a heel section of the article of footwear.

In some embodiments of the invention a collar of a textile footwear upper may be shaped such as to facilitate entry of a wearer's foot.

The application path and/or the second application path and/or the third application path may be lowered at the collar in order to facilitate entry. Alternatively, or additionally, a specific application of the thermoplastic filament and/or the second thermoplastic filament and/or the third thermoplastic filament may yield specific properties, like increased flexibility, at the collar in order to facilitate entry. This may be achieved, for example, by increasing the application speed for applying the thermoplastic filament and/or the second thermoplastic filament and/or the third the thermoplastic filament.

The specific properties and their application in specific areas listed herein are to be understood as merely exemplary. The skilled person will understand that other specific properties may be contemplated at other specific areas for certain articles of footwear.

Furthermore, it should be understood that although the claim language refers to "at least one specific property" in "at least one specific area" this does encompass that several specific properties may be present in one specific area, and also that one or more specific properties may exist in a first specific area and one or more specific properties in a second specific area.

The method may comprise the step of: creating an individual footwear last based on the movement pattern, wherein when applying the thermoplastic filament, the thermoplastic filament is applied to the individual footwear last. Thereby, the footwear last can be created to take into account the movement pattern. Thus, the thermoplastic filament applied to the individual footwear last can be formed to reflect the shape of the individual footwear last and thereby the movement pattern. Accordingly, the textile footwear upper can be formed to better reflect and meet the movement pattern.

The step of creating the individual footwear last may include that other parameters, in particular a foot shape of the individual's foot may also be considered when creating the footwear last, besides the movement pattern, and/or the load and/or deformation data that is derived from the movement pattern.

The method may comprise the step of: obtaining the foot shape from the movement pattern of the individual's foot. Alternatively or in addition, the method may comprise: obtaining a foot shape of the individual's foot. The obtaining of the foot shape may comprise scanning the foot with a scanner as explained for the obtaining of the movement pattern.

The step of creating the individual footwear last may comprise shaping a granular jamming vacuum last and using it as the footwear last. Thus, a re-usable footwear last can be provided which can reduce costs and/or an environmental impact and/or storage requirements.

The granular jamming vacuum last may comprise an airtight membrane defining an enclosure and a granular filling material, for example sand and/or ground coffee, located in the enclosure. The granular jamming vacuum last may comprise a vacuum port, preferably having a valve, for evacuating the enclosure. The granular jamming vacuum last may have the rough shape of a typical and/or average footwear last of a given footwear size and/or side, i.e. left or right. Thus, different granular jamming vacuum lasts may be provided for different footwear sizes and/or sides, in particular a first set of granular jamming vacuum lasts with different sizes for the left side and a second set of granular jamming vacuum lasts with different sizes for the right side. Alternatively, the same granular jamming vacuum lasts may be used for the left and the right side, and diversification may only be made regarding footwear sizes.

The step of creating the individual footwear last may comprise 3D printing the footwear last. Thus, a highly detailed and/or individualized footwear last can be made available. Furthermore, 3D printers are readily available so that creating the footwear last can be simplified and/or conducted almost everywhere. Further still, the footwear last can be used for manufacturing several bespoke articles of footwear for the same individual without having to repeat the procedure of obtaining the foot shape every time.

3D printing the footwear last may comprise using a 3D printer to create the footwear last based on the foot shape of the individual's foot, in particular based on the, preferably digital, data representative of the foot shape. The 3D printer may be any type of 3D printer, in particular based on any working principle, known to the skilled person and deemed to be applicable.

The movement pattern and/or the load and/or deformation data and/or the footwear last and/or the filament application data may be kept for future manufacturing of a further bespoke article of footwear and/or a further textile footwear upper. For example, the movement pattern can be used for comparing to at a later point in time, or when wearing and moving with the bespoke article of footwear. Accordingly, it can be seen if the movement pattern improved or impaired. In addition, manufacturing of the next article of footwear for the same individual can be sped up. In particular customer loyalty can be increased as the next bespoke article of footwear is available easier and/or faster from the company already in possession of the movement pattern and/or the load and/or deformation data and/or the footwear last and/or the filament application data than from another company. From a marketing point of view, "footwear as a service" could be offered.

The movement pattern, in particular the, preferably digital, data representative of the movement pattern and/or the load and/or deformation data and/or the footwear last and/or the filament application data may be stored locally in a memory at the manufacturer's premises, or on a server, in particular in a cloud.

The manufacturing system for manufacturing the bespoke article of footwear may comprise various sub-systems for implementing the method disclosed herein. The manufacturing system may comprise a movement pattern determination sub-system and/or a footwear manufacturing sub-system. In embodiments, the manufacturing system may comprise a footwear last manufacturing sub-system.

The movement pattern determination sub-system is configured to obtain the movement pattern of the individual, preferably the individual's foot, in particular the, preferably digital, data representative of the movement pattern.

The movement pattern determination sub-system may comprise one or more of the scanners mentioned above. The scanner or scanners may be located on the individual's premises, in particular in the case of a hand-held 3D scanner, or in a store, in particular an apparel and/or footwear store, where a service for individually fitting an article of footwear may be offered. The, preferably digital, data representative of the movement pattern may be made available to the footwear last manufacturing sub-system via a network, in particular a local network and/or the internet.

The optional footwear last manufacturing sub-system is configured to create the footwear last based on the movement pattern, in particular based on the, preferably digital, data representative of the movement pattern.

The footwear last manufacturing sub-system may comprise the 3D printer mentioned above. The 3D printer may be located on the individual's premises, in a store, in particular an apparel and/or footwear store, where a service for individually fitting an article of footwear may be offered, or preferably at a factory site, in particular where the article of footwear is later created. The, preferable digital, data representative of the foot shape may be made available to the 3D printer via a network, in particular a local network and/or the internet.

Alternatively, or additionally, the footwear last manufacturing sub-system may comprise the granular jamming vacuum last or the granular jamming vacuum lasts mentioned above. Furthermore, the footwear last manufacturing sub-system may comprise a vacuum pump for evacuating the enclosure of the granular jamming vacuum lasts. Further still, a morphing mold and/or an impression mold may be part of the footwear last manufacturing sub-system. Additionally, the footwear last manufacturing sub-system may comprise a mold drive for setting the axial positions of the rods of the morphing molds. The, preferable digital, data representative of the movement pattern may be made available to the morphing mold and/or the mold drive via a network, in particular a local network and/or the internet.

The footwear manufacturing sub-system may comprise a set of manufacturing units for manufacturing the textile footwear upper based on the movement pattern. The set of manufacturing units may comprise a control unit for controlling the execution of the method by controlling other manufacturing units of the set of manufacturing units. The control unit may, for example, comprise a processing unit and a memory unit containing computer-readable instructions that may be read and executed by the processing unit in order to implement the method.

The set of manufacturing units may further comprise at least one or all of the following manufacturing units: the filament discharge unit, an extruder or several extruders, a gas supply unit, in particular an air supply unit for supplying gas, in particular air, to the gas discharge nozzles, a polymer supply unit for supplying a polymer composition to the extruder or the extruders and/or to the filament discharge nozzle or nozzles, a heating unit to heat the footwear last and/or the textile footwear upper and/or the sole unit, and/or a robotic handler for manipulating a relative position and/or orientation of the filament discharge nozzle or nozzles and/or the heating unit with respect to the footwear last.

The set of manufacturing units may further comprise at least one or all of the following manufacturing units: a print head for applying at least one print onto the textile footwear upper and/or the sole unit, a plasma unit for plasma treating the textile footwear upper and/or the sole unit, in particular prior to printing, a curing unit for curing the textile footwear upper and/or the sole unit and/or the at least one print, a further robotic handler for manipulating a relative position and/or orientation of the print head and/or the plasma unit and/or the curing unit with respect to the footwear last and/or the textile footwear upper, a de-shaping unit for removing the textile footwear upper from the footwear last, in particular a de-lasting unit for removing the textile footwear upper and the shoe sole from the footwear last, and/or a packing unit for packaging the article of footwear in a sales and/or transport packaging.

Furthermore, the footwear manufacturing sub-system may comprise an enclosure housing at least some, preferably the majority and possibly all manufacturing units of the set of manufacturing units. The enclosure may house all manufacturing units of the set of manufacturing units apart from the de-shaping unit and/or packing unit. The enclosure can provide protection during manufacturing, not only for personnel, but for the process itself.

The footwear manufacturing sub-system may comprise a single manufacturing station having the set of manufacturing units, or may comprise a plurality of identical manufacturing stations, each having its own set of manufacturing units and possibly each having a dedicated enclosure, which allows easy scalability of production capacities by adding or removing manufacturing stations.

The base footwear upper may be understood as a basic version of the textile footwear upper with respect to the specific footwear last, the basic version lacking any diversification regarding certain applications and/or preference. A variety of different textile footwear uppers may be derived from the same base footwear upper by using the second thermoplastic filament and possibly in addition the third thermoplastic filament to create said variety. Herein, the base footwear upper may already be useable as part of an article of footwear, in particular, however, without any specialization for a specific application and/or preference. The second thermoplastic filament and possibly additionally the third thermoplastic filament may be applied onto the base footwear upper for deliberately creating the at least one specific property in the at least one specific area, hereby adapting the textile element for specific applications and/or for specific preferences.

The different or specific applications regarding the article of footwear and/or the textile footwear upper may be different sports, like, for example, running, tennis, soccer, football, climbing, or athletics, and/or different activities, like, for example, walking, skating, or dancing, and/or leisure, where different properties in different sections of the article of footwear may be needed and/or may be advantageous.

The application path and/or the second application path and/or the third application path may at least partially be in the shape of a helix or a spiral, and/or meandering. An axial direction of the helix and a height direction of the footwear last may enclose an angle smaller than 30°, in particular smaller than 20° and preferably smaller than 10°.

During application of the thermoplastic filament and/or of the second thermoplastic filament and/or of the third thermoplastic filament at least one respective application path parameter may be varied.

The at least one specific area my encompass a change of course of the application path and/or the second application path and/or the third application path so that an exit direction of the application path and/or the second application path and/or the third application path exiting the at least one specific area is angled with respect to an entry direction of the respective application path, entering the at least one specific area, by at least 20°, at least 40°, at least 60°, at least 80°, at least 100°, at least 120°, or at least 140°. The application path and/or the second application path and/or the third application path may change its course within the at least one specific area by at least at least 20°, at least 40°, at least 60°, at least 80°, at least 100°, at least 120°, or at least 140°. The application path and/or the second application path and/or the third application path may be partially meandering in the at least one specific area. Furthermore, the application path and/or the second application path and/or the third application path may be partially spiral shaped in the at least one specific area.

It should be understood that although the wording "applying a thermoplastic filament onto a/the footwear last", "applying a second thermoplastic filament onto the base footwear upper" and/or "onto the thermoplastic filament" and "applying a third thermoplastic filament onto the base footwear upper", "onto the thermoplastic filament" and/or "onto the second thermoplastic filament" is used, this should not be construed as meaning that only one single layer of the thermoplastic filament and/or only one single layer of the second thermoplastic filament and/or only one single layer of the third thermoplastic filament is allowed on top of the respective underlying structure. In fact, several layers of the thermoplastic filament may be applied one on top of the other onto the footwear last. Correspondingly, several layers of the second thermoplastic filament and/or of the third thermoplastic filament may be applied one on top of the other onto the base footwear upper and/or the thermoplastic filament and/or the second thermoplastic filament. These layers may be fully or only partly overlapping.

If the thermoplastic filament is applied onto the footwear last with a maximum layer thickness of at most 0.5 mm, at most 0.25 mm, or at most 0.1 mm, in particular for forming the base footwear upper, material savings and a weight reduction can be achieved. Furthermore, a base layer with advantageously high flexibility can be provided for enhanced design freedom regarding the completed textile footwear upper.

The second thermoplastic filament and/or the third thermoplastic filament may be applied in the at least one specific area with a minimum layer thickness of at least 0.5 mm, at least 0.75 mm, at least 1 mm, or at least 2 mm. This can ensure an adequately high effect on the at least one specific property in the at least one specific area. Furthermore, differences in mechanical and/or thermal properties in different sections of the textile footwear upper can be increased. Thus, diversification regarding different textile footwear uppers can be enhanced.

In some embodiments of the invention sections, in particular straight sections, of the second application path may be angled with respect to underlying sections, in particular straight sections, of the application path in the at least one specific area. Furthermore, sections, in particular straight sections, of the third application path may be angled with respect to underlying sections, in particular straight sections, of the application path and/or of the second application path in the at least one specific area. In other words, application directions of the thermoplastic filament and/or the second thermoplastic filament and/or the third thermoplastic filament may differ. Furthermore, application schemes, in particular in terms of applied shapes, of the thermoplastic filament and/or the second thermoplastic filament and/or the third thermoplastic filament may differ. This allows advantageously adjusting and/or setting mechanical and/or thermal properties of the textile footwear upper in the at least one specific area. Furthermore, design freedom can be increased as specific aesthetic effects can be created.

When viewing the at least one specific area perpendicularly along a surface normal of the textile footwear upper, at least some and preferably the majority of sections of the second application path and at least some and preferably the majority of sections of the application path may enclose an angle larger than 0°, preferably larger than 30°, larger than 45°, or larger than 60°, and smaller than 180°. Said angle may essentially be 90°. Correspondingly, at least some and preferably the majority of sections of the third application path and at least some and preferably the majority of sections of the application path and/or of the second application path may enclose an angle larger than 0°, preferably larger than 30°, larger than 45°, or larger than 60°, and smaller than 180°. Said angle may essentially be 90°, too.

The thermoplastic filament may be applied as to form a thermoplastic layer, and the second thermoplastic filament may be applied as to form a second thermoplastic layer above the thermoplastic layer.

Therein, the second thermoplastic layer may be fixed to the thermoplastic layer in the at least one specific area, whereby an advantageous strengthening and/or stiffening of the textile footwear upper can be obtained. This effect can be further increased if sections of the second application path are additionally angled with respect to underlying sections of the application path in the at least one specific area.

The second thermoplastic layer may be fixed to the thermoplastic layer in the at least one specific area by any applicable method, like, for example, glueing, stitching, fusing, etc. Advantageously, however, the second thermoplastic layer may be thermally bonded to the thermoplastic layer, preferably by applying the second thermoplastic filament onto the underlying thermoplastic filament by depositing the former in an at least partially molten and/or liquid state onto the latter, most preferably by discharging the second thermoplastic filament from the filament discharge nozzle of the filament discharge unit.

Alternatively, the second thermoplastic layer may be moveable relative to the thermoplastic layer in the at least one specific area. This can increase wear comfort and/or facilitate entry of a wearer.

The second thermoplastic layer and the thermoplastic layer, and/or the second thermoplastic filament and the thermoplastic filament may be fixed to each other outside of the at least one specific area, in particular by any applicable method like, for example, glueing, stitching, fusing, and so forth. Advantageously, the second thermoplastic layer may be thermally bonded to the thermoplastic layer outside of the at least one specific area by applying the second thermoplastic filament onto the underlying thermoplastic filament by depositing the former in an at least partially molten and/or liquid state onto the latter, most preferably by discharging the second thermoplastic filament from the filament discharge nozzle of the filament discharge unit.

The second thermoplastic layer and the thermoplastic layer, and/or the second thermoplastic filament and the thermoplastic filament may be kept moveable in the at least one specific area by using an intermediate blocking layer on top of the thermoplastic layer and/or the thermoplastic filament when applying the second thermoplastic layer and/or the second thermoplastic filament. The intermediate blocking layer may be removed after the second thermoplastic layer and/or the second thermoplastic filament has hardened and/or fused. By keeping the second thermoplastic layer moveable relative to the thermoplastic layer in the at least one specific area, a freestanding flap, tongue, and/or strap may be provided.

In some embodiments of the invention the second thermoplastic filament may at least partly be applied as a wadding in the at least one specific area. In this way, improved thermal insulation can be achieved. Furthermore, wear comfort can be increased, as an advantageous padding can be provided.

Herein, a "wadding" may be understood as a structure in which a thermoplastic filament, in particular the second thermoplastic filament, is in a disordered state and may take up a higher volume compared to an ordered state of the thermoplastic filament, in particular the second thermoplastic filament, where it may be present as a plurality of path segments, in particular loops, in particular as the plurality of second path segments and in particular as the plurality of second loops. Such wadding may be obtained by an increased distance between the filament discharge nozzle and the footwear last during deposition of the second thermoplastic filament compared to a distance between the filament discharge nozzle and the footwear last while applying the second thermoplastic filament in the form of the plurality of second path segments, in particular of second loops, as described before.

If the second thermoplastic filament is at least partly applied as a wadding, the third thermoplastic filament may cover the second thermoplastic filament so that the thermoplastic filament and the third thermoplastic filament may form a protective pocket for the second thermoplastic filament and/or the wadding.

The thermoplastic filament and/or the second thermoplastic filament and/or the third thermoplastic filament may include any suitable thermoplastic polymer material and/or composition, for example polyester, polyamide, polyether block amide (PEBA), for example PEBAX^{®} (Arkema), thermoplastic polyurethane (TPU), ethylene vinyl acetate (EVA), polyolefin, such as polyethylene or polypropylene, or mixtures thereof.

In addition, the thermoplastic filament and/or the second thermoplastic filament and/or the third thermoplastic filament may contain one or more additives, like pigments, foaming agents, cross-linking agents, etc.

If the thermoplastic filament and the second thermoplastic filament and/or the third thermoplastic filament are made from the same material, the method for manufacturing can advantageously be simplified. Additionally, storage requirements can be decreased as less material has to be stocked.

The term "same material" may be understood to mean exactly the same material composition or a similar material composition taking tolerances into account.

Alternatively, the thermoplastic filament and/or the second thermoplastic filament and/or the third thermoplastic filament may be made from different materials. Thus, design freedom can be increased and/or more complex designs can be enabled.

In some embodiments the thermoplastic filament, the second thermoplastic filament and possibly also the third thermoplastic filament may be parts of a common continuous thermoplastic filament. Hereby, a fast, reliable, transparent and/or traceable application of the thermoplastic filament and the second thermoplastic filament can be ensured.

The sole unit may comprise a midsole and an outsole, and possibly an insole, too. The midsole may be made from any suitable material, in particular a thermoplastic polymer, like, for example polyester, polyamide, polyether block amide (PEBA), for example PEBAX^{®} (Arkema), thermoplastic polyurethane (TPU), ethylene vinyl acetate (EVA), polyolefin, such as polyethylene or polypropylene, or mixtures thereof. The outsole may be made from any suitable material, for example natural or synthetic rubber, or from a thermoplastic polymer, like, for example, a thermoplastic polyurethane (TPU). The midsole and/or the outsole may be molded, 3D printed, or manufactured using any other applicable method. The midsole may, in particular additionally, be foamed.

One preferred material combination may be PEBAX^{®} (Arkema) for the midsole and thermoplastic polyurethane (TPU), such as Desmopan^{®} 2790A or Desmopan^{®} 9392A (Covestro), for the thermoplastic filament and possibly the second thermoplastic filament and/or the third thermoplastic filament. A synthetic rubber may be preferred for the outsole.

When manufacturing the midsole, softened PEBAX^{®} (Arkema) may be injection-molded and foamed. Alternatively, PEBAX^{®} (Arkema) may be 3D printed and possibly then foamed to form the midsole. The midsole may afterwards be attached to the footwear last. The rubber outsole may be attached to the midsole by glueing or any other applicable method, in particular before or after attaching the midsole to the footwear last. Finally, the thermoplastic filament and possibly the second thermoplastic filament and/or the third thermoplastic filament, all made from the same thermoplastic polyurethane (TPU), may be applied to the footwear last to form the textile footwear upper, as described herein. The midsole may be connected to the textile footwear upper by applying the thermoplastic filament and possibly the second thermoplastic filament and/or the third thermoplastic filament also partly onto the midsole.

Alternatively, the textile footwear upper may be formed by applying the thermoplastic filament and possibly the second thermoplastic filament and/or the third thermoplastic filament, being all made from the same thermoplastic polyurethane (TPU), first, whereupon softened PEBAX^{®} (Arkema) may be directly injection-molded or 3D printed to an underside of the textile footwear upper, and may afterwards possibly be foamed, to form the midsole. Finally, the rubber outsole may be fastened to an underside of the midsole by any applicable method, for example glueing.

3D printing the midsole may enable customizing the sole unit as well, as corresponding 3D printing data for printing of the midsole may be derived from the foot shape, in particular from the, preferably digital, data representative of the foot shape. A choice for the outsole may as well be offered for the individual. The outsole may be 3D printed onto the midsole.

For increased recyclability, the thermoplastic filament and possibly the second thermoplastic filament and/or the third thermoplastic filament and the sole unit, in particular the midsole, the outsole, and possibly the insole, may all be made from the same material or the same material composition, or at least from chemically similar materials or chemically similar material compositions, like, for example, thermoplastic polyurethane (TPU).

The methods, elements and articles disclosed herein are not intended to be limited to the application and embodiment described above. In particular, they may have a number of individual elements, components and units as well as process steps deviating from a number specified herein in order to fulfill a mode of operation described herein. In addition, in the case of value ranges specified in this disclosure, values lying within the specified limits are also to be regarded as disclosed.

In particular, it is pointed out that all features, properties and methods described in relation to an element, or an article are transferable mutatis mutandis to methods and can be used in the sense of the invention and are deemed to be co-disclosed. The same applies in the opposite direction. This means that structural features mentioned in relation to methods can also be taken into account and claimed within the scope of device claims and can also be counted as part of the disclosure.

In the following, the present invention is described by way of example with reference to the accompanying figures. The drawing, the description and the claims contain numerous features in combination. The skilled person will also usefully consider the features individually and use them sensibly in combination in the context of the claims.

If there is more than one example of a particular object, only one of them may be provided with a reference sign in the figures and in the description. The description of this specimen can be transferred accordingly to the other specimens of the object. If objects are named in particular by means of numerical words, such as first, second, third object, etc., these are used to name and/or assign objects. Accordingly, for example, a first object and a third object, but no second object, can be included. However, a number and/or sequence of objects could also be derived from numerical words.

### Brief description of the drawings

Embodiments of the present disclosure will now be described by way of example only and with reference to the following accompanying drawings.
Figure 1 schematically shows a bespoke article of footwear for an individual in a three-dimensional view.
Figure 2 schematically depicts an alternative bespoke article of footwear in a three-dimensional view; the alternative article of footwear being for the same individual and being based on the same footwear last as the article of footwear of figure 1.
Figure 3 contains a schematic view of a manufacturing system for manufacturing the articles of footwear of figures 1 and 2, and further bespoke articles of footwear for other individuals.
Figure 4 shows a schematic of a movement pattern determination sub-system of the manufacturing system of figure 3.
Figure 5 depicts a schematic of an alternative movement pattern determination sub-system of the manufacturing system of figure 3.
Figure 6 contains a schematic view of a footwear last manufacturing sub-system of the manufacturing system of figure 3.
Figure 7 depicts a schematic of an alternative footwear last manufacturing sub-system of the manufacturing system of figure 3.
Figure 8 contains a schematic view of a part of a footwear manufacturing sub-system of the manufacturing system of figure 3.
Figure 9 shows a schematic flow diagram of a method for manufacturing different bespoke articles of footwear.
Figure 10 depicts a three-dimensional schematic of a partly finished base footwear upper in the process of being finalized on a footwear last.
Figure 11 shows a three-dimensional schematic of a partly finished base footwear upper in the process of being finalized on the footwear last, wherein, as a variant, specific properties are being created in a specific area.
Figure 12 contains an enlarged view of the base footwear upper of figure 10.
Figure 13 depicts a three-dimensional schematic of a step for creating the textile footwear upper for the article of footwear of figure 1 having specific properties in a specific area.
Figure 14 shows an enlarged view of a part of the specific area of figure 13.
Figure 15 contains a three-dimensional schematic of a further step to obtain the article of footwear having specific properties in a specific area.
Figure 16 shows a three-dimensional schematic of a further step following the step of figure 15 to obtain the article of footwear of figure 2 having specific properties in a specific area.
Figure 17 depicts a three-dimensional schematic of the base footwear upper indicating specific areas as possible targets for applying specific properties.
Figure 18 schematically shows a further alternative article of footwear in a three-dimensional view; the further alternative article of footwear being based on the same base footwear upper as the articles of footwear of figures 1 and 2.
Figure 19 presents an alternative base footwear upper, in a schematic three-dimensional view.
Figure 20 schematically shows a further alternative article of footwear in a three-dimensional view; the further alternative article of footwear being based on a further base footwear upper.
Figure 21 depicts a three-dimensional schematic view of a hindfoot section of yet another textile footwear upper.
Figure 22 depicts an example with one first element on the footwear last.

### Detailed Description

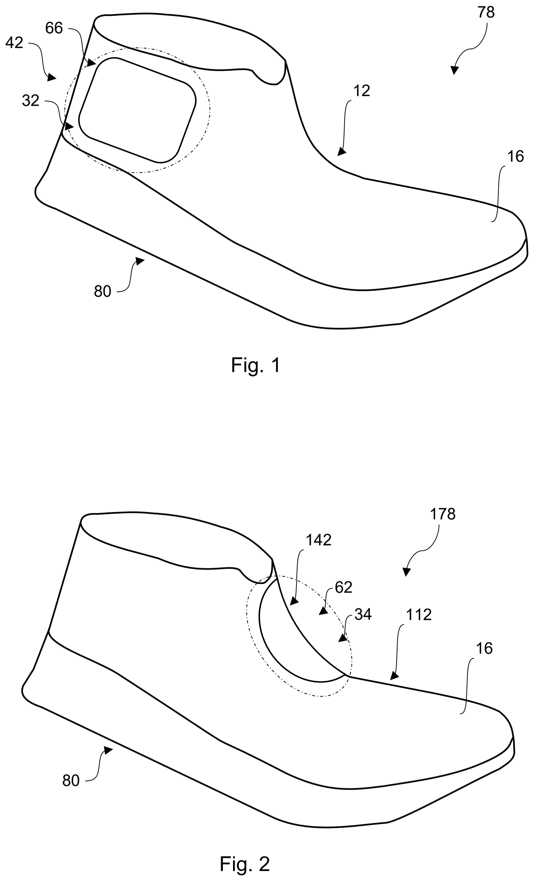

Figure 1 shows a bespoke article of footwear 78 for an individual, in a schematic three-dimensional view. The article of footwear 78 is a sports shoe and comprises a textile footwear upper 12 and a sole unit 80 which is connected to the textile footwear upper 12. The textile footwear upper 12 is custom-made for the individual. The sole unit 80 is a standard sole unit for the given type of footwear size and side, i.e. left or right.

As is known in the art, the sole unit 80 may be formed by several stacked sole elements, for example a midsole, an outsole and possibly also an insole (not shown). The midsole may be made from any suitable material, in particular a thermoplastic polymer, like, for example polyester, polyamide, polyether block amide (PEBA), for example PEBAX^{®} (Arkema), thermoplastic polyurethane (TPU), ethylene vinyl acetate (EVA), polyolefin, such as polyethylene or polypropylene, or mixtures thereof. The outsole may be made from any suitable material, for example natural or synthetic rubber, or from a thermoplastic polymer, like, for example, a thermoplastic polyurethane (TPU). The midsole and/or the outsole may be molded, 3D printed, or manufactured using any other applicable method. The midsole may, in particular additionally, be foamed.

In the case of a 3D printed midsole and possibly a 3D printed outsole, the sole unit 80 may, in an alternative embodiment, be custom-made for the individual, too.

Figure 2 shows another bespoke article of footwear 178 for the same individual, in a schematic three-dimensional view. The article of footwear 178 is a leisure shoe and comprises a textile footwear upper 112 and a sole unit 80 which is connected to the textile footwear upper 112. The sole unit 80 of the article of footwear 178 of figure 2 is identical to the sole unit 80 of the article of footwear 78 of figure 1. However, their textile footwear uppers 12, 112 are different.

The article of footwear 78 of figure 1 and the article of footwear 178 of figure 2 are custom-made for the same individual using an identical custom-made footwear last 22 and the same type of base footwear upper 16. Diversification for different applications and/or preferences is achieved by adding diversification structures 42, 142 to the common base footwear upper 16.

In the exemplary embodiment of figure 1, the diversification structure 42 of the article of footwear 78 is a strengthening, stiffening and protective plating applied to the base footwear upper 16 in a specific area 32, namely at a heel section 66. The diversification structure 142 of the article of footwear 178 is in this example a cushioning and thermal insulation applied to the base footwear upper 16 in a specific area 34, namely at an instep section 62. Both diversification structures 42, 142 yield distinctive aesthetic effects, too.

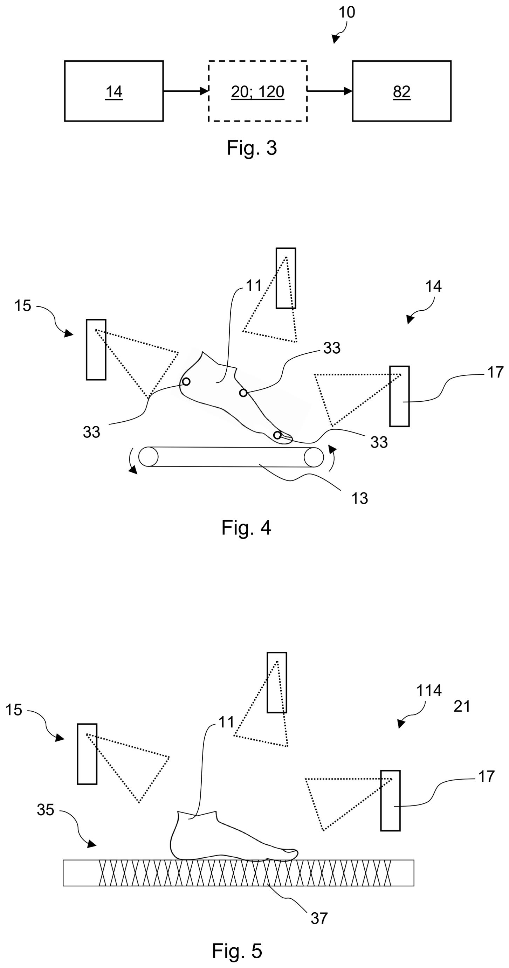

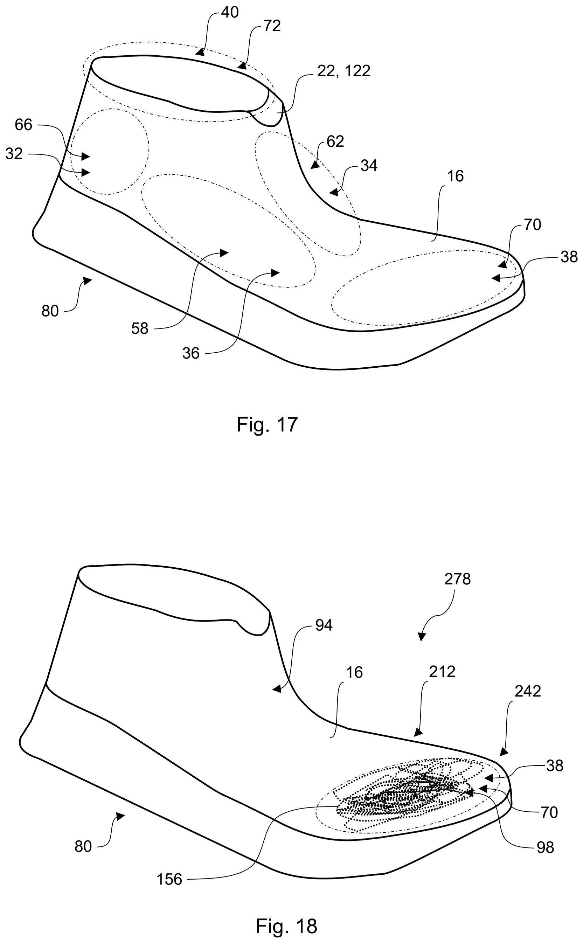

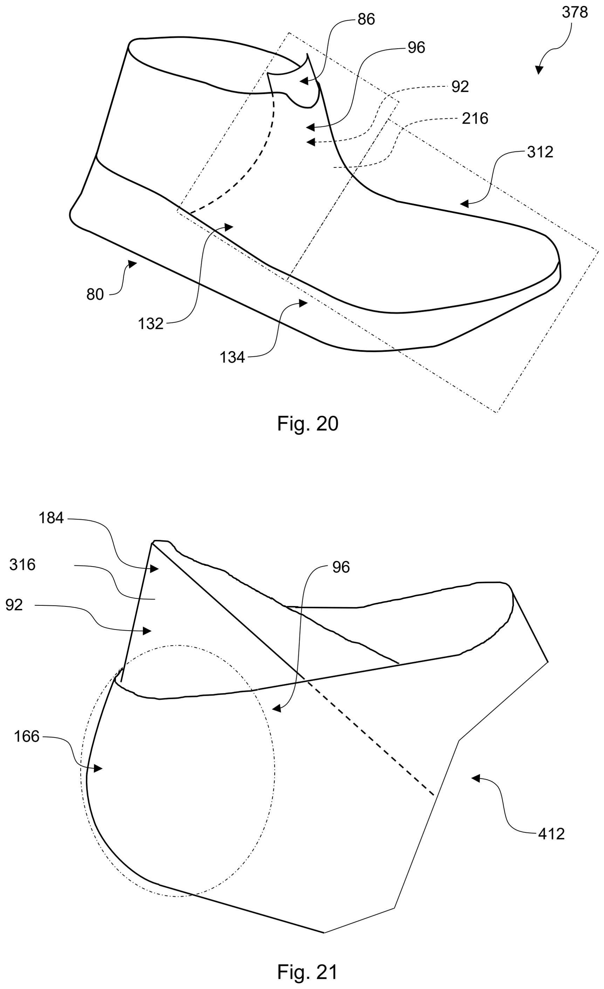

Figure 3 contains a schematic view of a manufacturing system 10 for manufacturing the articles of footwear 78, 178 and in particular for manufacturing their textile footwear uppers 12, 112. Both articles of footwear 78, 178 and in fact a whole variety of different bespoke articles of footwear, for example also the articles of footwear 278, 378 shown in figures 18 and 20 can be manufactured by the manufacturing system 10.

The manufacturing system 10 comprises various sub-systems. The manufacturing system 10 comprises a movement pattern determination sub-system 14, optionally a footwear last manufacturing sub-system 20, and a footwear manufacturing sub-system 82. The sequence of arrows in figure 3 indicates how the sub-systems are used one after the other.

In the current non-limiting example, the movement pattern determination sub-system 14 is located at a store, in particular a sports apparel and/or footwear store, where a service for individually fitting an article of footwear is offered. The optional footwear last manufacturing sub-system 20 and the footwear manufacturing sub-system 82 are located on a manufacturer's premises.

Figure 4 depicts a schematic of the movement pattern determination sub-system 14 in the process of scanning a movement of an individual's foot 11. In the present example, the foot 11 is shown in a first running position, in which the foot 11 is not in contact with the floor. The movement pattern determination sub-system 14 is configured to obtain the movement pattern of the individual's foot 11, namely digital data representative of the movement pattern, and may be configured to obtain image data, in particular moving image data, of the individual, in particular the individual's foot 11. The image data may comprise plural images of the individual, in particular the individual's foot 11, in different running positions. The digital data representative of the movement pattern may be edited to manufacture the textile footwear upper 12, 112 based on the movement pattern. The digital data representative of the foot shape are made available to the footwear manufacturing sub-system 82 and optionally to the footwear last manufacturing sub-system 20 over the internet, via any other suitable data exchange means.

The movement pattern determination sub-system 14 may comprise any one or more scanners deemed applicable by a person skilled in the art. Figure 4 shows, as an example, a scanning unit 15 comprising a plurality of cameras 17 which are configured to simultaneously take photos and/or videos of the foot 11 from different points of view, in different movement positions (running positions) and during movement of the foot 11. During movement of the foot 11, the foot 11 may take the different movement positions. Different movement positions can mean that the foot 11 may take different positions during movement, such as extension of the foot 11, flexion of the foot 11, movement of joints of the foot 11 or the leg, deformation because of contact with the ground, deformation because of dynamic forces acting on the foot 11 etc. The different movement positions may be captured as snapshots of the foot 11 during movement.

The movement pattern determination sub-system 14 may comprise a sporting equipment, such as a treadmill 13, on which the foot 11 is running when obtaining the movement pattern. The treadmill 13 is used to achieve a natural movement of the foot 11 during running. Beneficially, the scanning unit 15 may be fixedly installed, as the movement of the foot 11 and/or the individual relative to the ground is compensated by the treadmill 13.

Using known computational techniques, one or more 3D datasets can be created from the photos, e.g., image data, and videos, e.g., moving image data, and made available as the digital data representative of the movement pattern. Accordingly, the digital data may comprise image data. In order to provide appropriate illumination of the foot 11, the movement pattern determination sub-system 14 may comprise one or more illumination sources (not shown). Alternatively, a 3D laser scanner or a structured-light 3D scanner are also preferred examples of applicable scanners.

For obtaining the movement pattern, the scanning unit 15 may scan the whole foot 11 in static position of the movement and/or during movement. The movement may be a natural movement of the foot 11, for example during running on the treadmill 13. However, the scanning unit 15 may scan additionally or alternatively only certain sections of the foot or one or plural markers 33 placed on the individual, in particular the individual's foot 11. Figure 4 shows example markers 33, wherein a first marker 33 is placed on a heel section of the foot 11, a second marker 33 is placed on an instep section of the foot 11, and a third marker 33 is placed on a toe section of the foot 11. The movement pattern can be obtained by scanning of the movement of the markers 33 caused by movement of the foot 11. In order to be able to compare the pattern obtained based on the markers 33 with a reference pattern, the markers 33 may be placed on predefined positions on the foot 11.

Optionally, the movement pattern determination sub-system 14 may be configured to obtain a foot shape of the foot 11, namely digital data representative of the foot shape. Therefore, the scanner unit 15 may be used to derive a 3D dataset of the foot shape. The digital data representative of the foot shape may be edited so as to provide a footwear last 20, that is slightly smaller than the foot shape. The digital data representative of the foot shape may be made available to the footwear last manufacturing sub-system 20 over the internet.

The movement pattern determination sub-system 14 may comprise a mobile device, such as a smartphone comprising one or several cameras, wherein the mobile device may function as the scanning unit 15.

The movement pattern determination sub-system 14 may comprise an analyzing unit for analyzing image data, in particular moving image data, generated by the scanning unit 15. The image data may comprise a first image of the individual's foot 11 in a first running position, for example the foot 11 in full contact with the treadmill 13, and a second image of the individual in a second running position different to the first running position. The second image may show the foot 11 in part-contact or fully without contact with the treadmill 13.

Figure 5 shows schematics of an alternative movement pattern determination subsystem 114 in the process of obtaining the movement pattern of the individual's foot 11. The foot shape determination sub-system 114 of figure 5 may be used in addition or instead of the foot shape determination sub-system 14 of figure 4.

The movement pattern determination subsystem 114 corresponds to the movement pattern determination subsystem 14 of figure 4, and comprises instead of the treadmill 13 a load detector unit 35 comprising plural load detectors 37 schematically illustrated by sandglass forms. The load detectors 37 are configured to detect the load on the foot 11 when running on the load detector unit 37.

The movement pattern determination subsystem 114 optionally comprises the scanning unit 15 for scanning the foot 11 which may help to match the load on the foot 11 detected by the load detectors 37 with the location of the foot 11. However, the load detectors 37 may be provided in such a density in the load detector unit 35 such that a fine grid of load data can be obtained, in one or plural running positions of the foot 11. Accordingly, at least the load acting on the sole of the foot 11 can be obtained as the movement pattern. Furthermore, the fine grid of load data may be used to derive a foot shape and match with the sensor data of each load detector 37 with a respective location on the foot 11.

In the example of figure 5, the foot 11 is in a second running position, in which the foot 11 is contacting the load detector unit 35. In a further running position, the foot 11 may partly contact the load detector unit 35, for example only with the forefoot of the foot 11.

The optional footwear last manufacturing sub-system 20 is configured to create the footwear last 22 based on the movement pattern. In one embodiment, a reference footwear last is provided. The footwear last 22 is created by adapting the reference footwear last based on the movement pattern. For example, the movement pattern may comprise particular deformation data of the foot 11, and the reference footwear last may be adapted based on the deformation data. Such adaption may comprise the addition of material to the reference footwear last, for example via 3D printing, or the removal of material of the reference footwear last by a removal tool, such as a cutter or a milling tool.

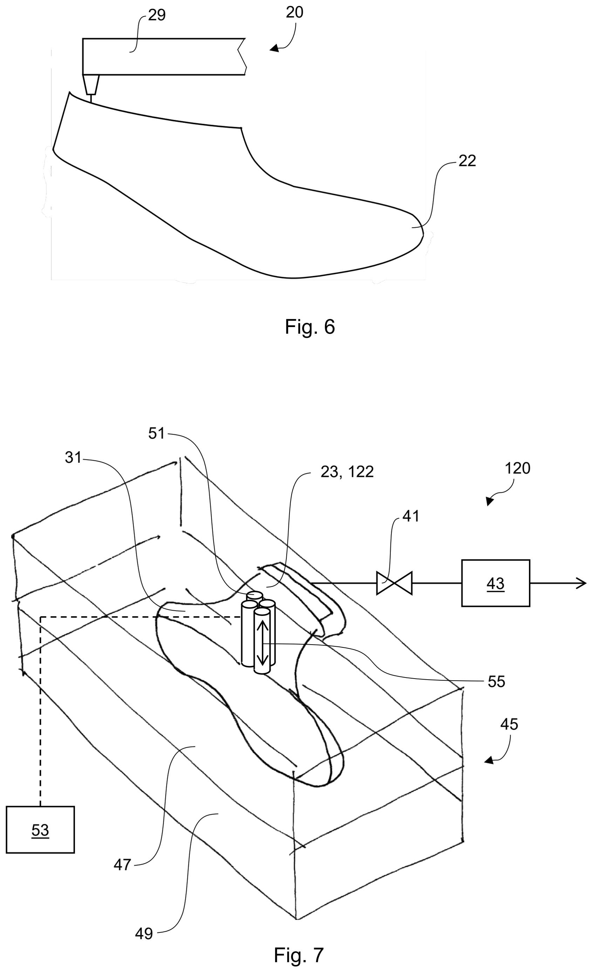

Figure 6 shows a schematic of an embodiment of the optional footwear last manufacturing sub-system 20. The footwear last manufacturing sub-system 20 is configured to create the footwear last 22 based on the previously acquired digital data representative of the movement pattern. The footwear last manufacturing sub-system 20 comprises a 3D printer 29 for printing the footwear last 22 based on the digital data representative of the movement pattern, and optionally based on the digital data representative of the foot shape. The foot shape may be used and adapted based on the movement pattern to create the footwear last 22. Alternatively, a reference foot shape and/or the reference footwear last may be considered. The adaption may comprise to identify locations on the foot with high/low load and/or high/low deformation and to add or remove material at said locations. Adding or removing material can be understood to provide additional or less material at said locations, for example when 3D printing.

Figure 7 contains a schematic of an alternative embodiment of a footwear last manufacturing sub-system 120 which may be employed instead of the footwear last manufacturing sub-system 20. The footwear last manufacturing sub-system 120 is configured to create a footwear last 122 based on the previously acquired digital data representative of the movement pattern and/or the foot shape.

The footwear last manufacturing sub-system 120 comprises a granular jamming vacuum last 23. The granular jamming vacuum last 23 comprises an airtight membrane 31 defining an enclosure and a granular filling material, for example ground coffee, located in the enclosure (not shown). The granular jamming vacuum last 23 may comprises a vacuum port with a vacuum valve 41 for evacuating the enclosure.

The granular jamming vacuum last 23 has the rough shape of a typical average footwear last of a given footwear size and side, i.e. left or right. In fact, the footwear last manufacturing sub-system 120 comprises different granular jamming vacuum lasts for different footwear sizes and sides (not shown), namely a first set of granular jamming vacuum lasts with different sizes for the left side and a second set of granular jamming vacuum lasts with different sizes for the right side. The granular jamming vacuum last 23 shown in figure 7 is one of those.

Furthermore, the footwear last manufacturing sub-system 120 comprises a vacuum pump 43 connected to the vacuum valve 41 for evacuating the enclosure of the granular jamming vacuum last 23.

The footwear last manufacturing sub-system 120 comprises a morphing mold 45. The morphing mold 45 may be any mold type known to the skilled person and deemed applicable herein, that allows recurringly changing the shape of its mold recess. In the current example, the morphing mold 45 comprises a first mold element 47 and a second mold element 49, which together define a mold recess. Each of the mold elements 47, 49 has a plurality of rods 51 forming a field, all arranged in parallel, which may be individually moved along their respective axial directions 55, and which may be locked at any axial position along their axial directions 55. For the sake of clarity, figure 7 shows only 4 of these rods for the first mold element 47. End faces of the rods 51 which face the mold recess, the downward facing end faces in the case of the rods 51 shown in figure 7, define the mold recess surface and therefore the recess shape. The rods 51 are motorized to be moveable along their axial directions 55. The footwear last manufacturing sub-system 120 comprises a mold drive 53 for setting the axial positions of the rods 51 based on the digital data representative of the movement pattern, and optionally based on the digital data representative of foot shape, which are available to the mold drive 53 via the internet.

After setting the axial directions 55 of all rods 51 based on the digital data representative of the movement pattern and optionally of the foot shape, thereby defining the mold recess, the granular jamming vacuum last 23 may be put into the mold recess, thereby pressing the granular filling material into its shape. Afterwards, the enclosure of the granular jamming vacuum last 23 may be evacuated and kept under vacuum, thereby jamming the granular filling material and, thus, keeping the granular jamming vacuum last 23 shaped. The granular jamming vacuum last 23 shaped like that may be used as the footwear last 122 for subsequent processing.

In an alternative embodiment, an impression mold may be used for shaping the granular jamming vacuum last 23 in the same manner as described with respect to the morphing mold 45.

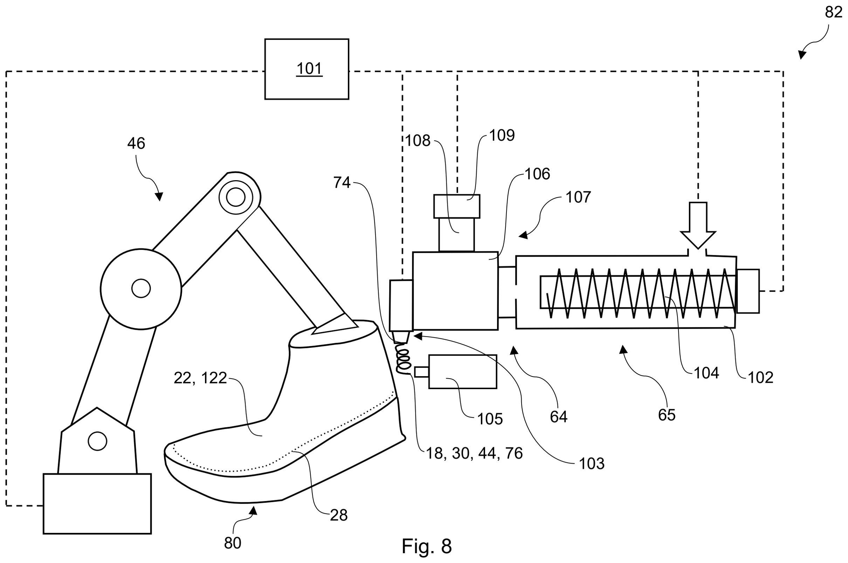

Figure 8 shows a schematic of a part of the footwear manufacturing sub-system 82. The footwear manufacturing sub-system 82 comprises a textile output unit 64 to apply the textile footwear uppers 12, 112, and in particular the base footwear upper 16, onto the footwear last 22, 122. In operation, the textile output unit 64 provides thermoplastic filaments, in particular a thermoplastic filament 18, an optional second thermoplastic filament 30, and an optional third thermoplastic filament 44, as described later, for depositing these on the footwear last 22, 122 and/or on already existing layers of material on the footwear last 22, 122. The thermoplastic filament 18 and/or the second thermoplastic filament 30 and/or the third thermoplastic filament 44 may be part of a continuous thermoplastic filament 76 supplied by the textile output unit 64.

The textile output unit 64 comprises a dosing unit 107, a melting unit 65 and a filament discharge unit 103 having a filament discharge nozzle 74.

The melting unit 65 is configured to melt a polymer composition, which is then ejected via the filament discharge nozzle 74. The melting unit 65 comprises an extruder having a barrel 102 and a screw 104 which is arranged in the barrel 102. For melting the polymer composition, the melting unit 65 comprises a material heating unit (not shown).

The polymer composition may include any suitable thermoplastic polymer material and/or composition, for example polyester, polyamide, polyether block amide (PEBA), for example PEBAX^{®} (Arkema), thermoplastic polyurethane (TPU), in particular as Desmopan^{®} 2790A or Desmopan^{®} 9392A (Covestro), ethylene vinyl acetate (EVA), polyolefin, such as polyethylene or polypropylene, or mixtures thereof. In addition, the polymer composition may contain one or more additives, like pigments, foaming agents, cross-linking agents, etc.

The filament discharge nozzle 74 is configured to dispense the molten polymer composition. The dosing unit 107 comprises a pump 108, a pump drive 109 to drive the pump 108 and a dosing head 106. The pump 108 generates pressure for dispensing the molten polymer composition as the thermoplastic filaments 18, 30, 44, 76 through the filament discharge nozzle 74. The pump 108 is configured to control, in particular fine tune, the output pressure of the molten polymer composition through the filament discharge nozzle 74.

The filament discharge unit 103 comprises a plurality of gas outlet openings (not shown), through which a flow of gas, in particular compressed air, is ejected. The flow of gas ejected by the gas outlet openings is used to influence the thermoplastic filaments 18, 30, 44, 76 emerging from the filament discharge nozzle 74 to form a helical shape. The textile output unit 64 and the method of forming the helical shaped filaments 18, 30, 44, 76 is disclosed in more detail in WO 2022/069583 A1.

The footwear manufacturing sub-system 82 comprises a handling unit 46 to control an application path 28 of the thermoplastic filament 18, optionally a second application path 54 of the second thermoplastic filament 30 and optionally a third application path 68 of the third thermoplastic filament 44 when applying the respective thermoplastic filament 18, 30, 44 onto the footwear last 22, 122 and/or onto already existing layers of material on the footwear last 22, 122 (in figure 8 only part of the application path 28 is depicted as an example).

The handling unit 46 is configured to generate a relative movement of the footwear last 22, 122 relative to the filament discharge unit 103 and in particular the filament discharge nozzle 74. The handling unit 46 is connected to the footwear last 22, 122 to create the relative movement during application of the thermoplastic filaments 18, 30, 44, 76 onto the footwear last 22, 122 and/or onto already existing layers of material on the footwear last 22, 122. The handling unit 46 is configured to move the footwear last 22, 122 relative to the stationary filament discharge unit 103. The handling unit 46 may also be configured to move the footwear last 22, 122 during the manufacturing process between different manufacturing units of the footwear manufacturing sub-system 82 (not shown), the textile output unit 64 being one such manufacturing unit.

The handling unit 46 is embodied as a robot, in particular with a robotic arm having six degrees of freedom. The connection between the handling unit 46 and the footwear last 22, 122 may be detachable so that the handling unit 46 may be connected with other footwear lasts, too.

In an alternative embodiment, the handling unit 46 may be configured to move the filament discharge unit 103 relative to the stationary footwear last 22, 122. It would also be conceivable to move both, the filament discharge unit 103 and the footwear last 22, 122, by respective handling units 46 during processing.

The footwear manufacturing sub-system 82 comprises a direct heat unit 105 for heating the sole unit 80 and/or the footwear last 22, 122 and/or the thermoplastic filaments 18, 30, 44, 76 prior and/or while applying the thermoplastic filaments 18, 30, 44, 76.

The footwear manufacturing sub-system 82 comprises a control unit 101 which is configured to control operation of at least the handling unit 46 and the textile output unit 64, in particular the melting unit 65, including the supply of the polymer composition, the pump drive 109, and the filament discharge unit 103. The control unit 101 is configured to control the operation of the at least one handling unit 46 and the textile output unit 64, in particular the melting unit 65, including the supply of the polymer composition, the pump drive 109, and the filament discharge unit 103 based on the movement pattern. Accordingly, the data representative of the movement pattern may be considered, e.g., the load data and/or the deformation data. The movement pattern may indicate a specific load and/or deformation in a specific area 34. Based on that, a specific property may be derived to be achieved, and then generated in the at least one specific area 34, for example by use of the control unit 101. For example, the operation of the handling unit 46, the textile output unit 64, the pump drive 109 and/or the filament discharge unit 103 may be controlled to apply more or less thermoplastic filament 18, 30, 44, 76 in the specific area 32 to achieve the specific property. For example for an area of malposition, more or less thermoplastic filament 18, 30, 44, 76 may be provided to at least partly compensate the malposition.

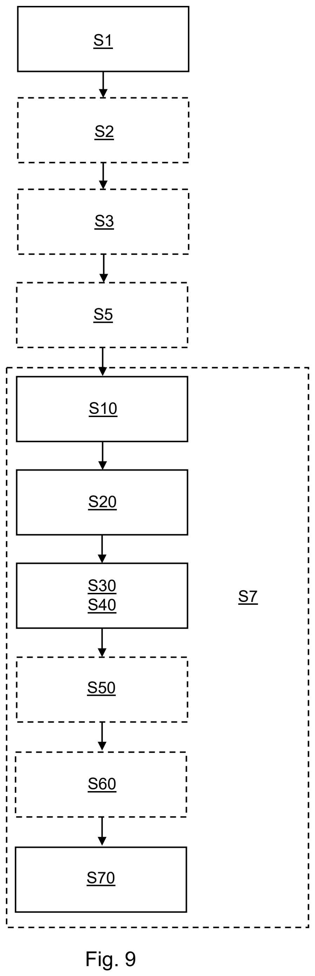

Figure 9 depicts a schematic flow diagram of a method for manufacturing bespoke articles of footwear, including the aforementioned articles of footwear 78, 178, and in particular their textile footwear uppers 12, 112. The method is implemented by the manufacturing system 10, which is partly controlled by the control unit 101 of the footwear manufacturing sub-system 82 to go through the steps of the method.

In step S1 a movement pattern of an individual's foot 11 is obtained using the movement pattern determination sub-system 14 of figure 4, which provides digital data representative of the movement pattern and optionally of the foot shape by scanning the movement of the foot 11.

Step S2 is optional and may comprise deriving load data and/or deformation data from the movement pattern for forming the textile footwear upper 12, 112, wherein the load and/or deformation data is indicative of at least one area of specific load on and/or specific deformation of the individual's foot 11. As a matter of completeness, load data and/or deformation data and load and/or deformation data may relate to the same. For deriving load data and/or deformation data, step S2 may comprise comparing the movement pattern to at least one reference movement pattern. The reference movement pattern may be based on experience data, in particular medical experience data. The experience data may be based on historic movement data and/or may be based on a movement model. The movement model may be based on an ideal movement of the individual, in particular the individual's foot. When comparing to the reference movement pattern, it may be derived as an example that the forefoot of the foot 11, i.e., an area of the foot 11, deforms more than the foot of the reference movement pattern, or that the movement is based more on the forefoot than the foot of the reference movement pattern. It may be a malposition or a preference of the individual to base the movement more on the forefoot, or it may be caused by the kind of sport that is intended. Accordingly, the area of the forefoot may be derived as area of specific load. Based on said load data and/or deformation data, at least one specific property may be created in a specific area 32, 34 of the textile footwear upper 12, 112 in consecutive steps of the method. The specific area 32, 34 may be determined based on the area of specific load and and/or specific deformation of the individual's foot 11 and/or may affect the area of specific load and and/or specific deformation of the individual's foot 11.

Step S3 is optional and may comprise creating filament application data for forming the textile footwear upper 12, 112, wherein when creating the filament application data, the movement pattern, in particular the load data and/or the deformation data, is considered. When creating the filament application data, the foot shape may be considered. When creating the filament application data, a user preference may be considered. The manufacturing system 10 may therefore comprise a user interface for inputting user preferences, like, for example, a planned application and/or sport, special preferences for softness, cushioning and/or stiffening, special aesthetic preferences, etc. The user interface is also located in the store along with the movement pattern determination sub-system. The digital data representative of the movement pattern may also be updated depending on the user preference and/or foot shape.

In optional step S5 the footwear last 22, 122 is created based on the movement pattern and optionally based on the foot shape using the footwear last manufacturing sub-system 20, the footwear last manufacturing sub-system 20 of figure 6, or the footwear last manufacturing sub-system 120 of figure 7.

If the footwear last manufacturing sub-system 20 is employed, the footwear last 22 is created by 3D printing based on the digital data representative of the movement pattern and/or of the foot shape by the 3D printer 29.

If the footwear last 22 is created with the footwear last manufacturing sub-system 120 of figure 6, the footwear last 22 is generated based on the digital data representative of the movement pattern and/or of the foot shape and based on the granular jamming vacuum last 23.

If the footwear last manufacturing sub-system 120 of figure 7 is employed, the mold recess of the morphing mold 45 is shaped based on the digital data representative of the foot shape. Afterwards, the granular jamming vacuum last 23 is shaped by pressing it into the morphing mold 45 and by evacuation of the granular jamming vacuum last 23 via the vacuum pump 43. After closing the valve 41, negative pressure and the shape of the granular jamming vacuum last 23 are kept. The granular jamming vacuum last 23 is used as the footwear last 122 in subsequent steps.

When optional step S5 is omitted, another footwear last 22 such as a standard footwear last or a footwear last created previously may be provided and used for the consecutive steps.

In step S7 the article of footwear is finally created. Step S7 comprises sub-steps S10, S20, S30, possibly S40, possibly S50, possibly S60 and S70.

In sub-step S10 the sole unit 80 is provided. The sole unit 80 may be available as a finished part, in particular supplied by a third party, and thus made available to the footwear manufacturing sub-system 82. Preferably however, the sole unit 80 is manufactured by the footwear manufacturing sub-system 82 in sub-step S10 (not shown). Herein, the midsole of the sole unit 80 may be injection-molded and possibly foamed afterwards, in particular using a physical and/or chemical blowing agent. Preferably, the midsole is directly injection-molded onto the outsole of the sole unit 80, wherein the finished outsole may be provided as an inlay in a mold before injecting a polymer mixture to create the midsole into the mold. The outsole may be injection-molded, too.

In sub-step S20 the footwear last 22, 122 is picked up by the handling unit 46. The sole unit 80 is fixed to the underside of the footwear last 22, 122 by any appropriate means. Preferably, the sole unit 80 is fixed to the underside of the footwear last 22, 122 by a switchable holding unit, for example by a magnetic holding unit or by a vacuum holding unit. In sub-step S20 the footwear last 22, 122 and/or the sole unit 80 may be pre-treated, in particular pre-heated, preferably by the direct heat unit 105. Afterwards the footwear last 22, 122 together with the affixed sole unit 80 is moved to a vicinity of the filament discharge unit 103 by the handling unit 46.

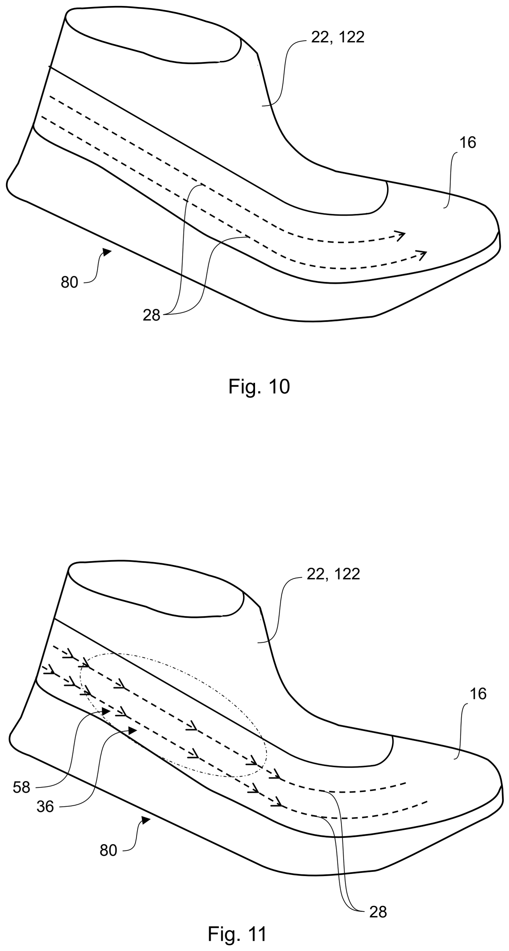

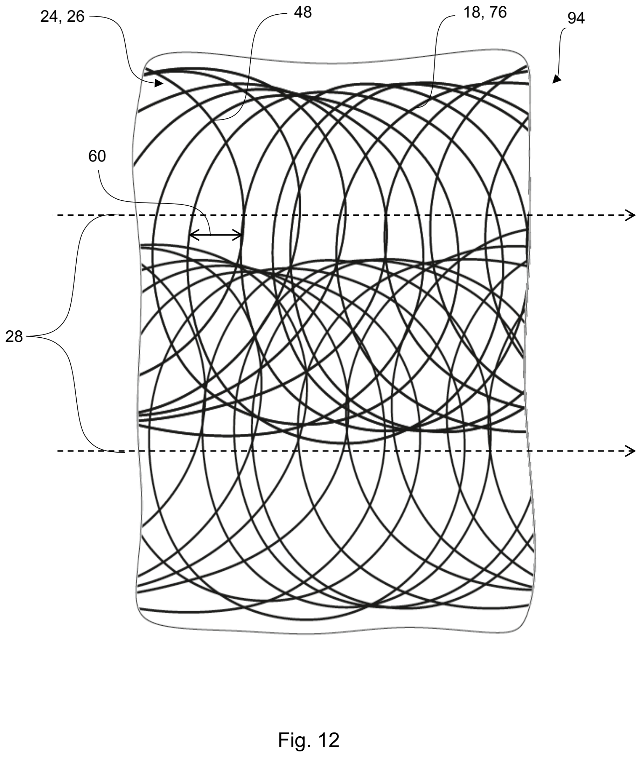

In sub-step S30 the base footwear upper 16 is created by applying the thermoplastic filament 18 onto the footwear last 22, 122 along the application path 28, based on the movement pattern. This is further depicted in figures 10 and 12, where figure 10 shows a three-dimensional schematic of the partly finished base footwear upper 16 in the process of being finalized on the footwear last 22, 122, and figure 12 an enlarged view of a finished part of the base footwear upper 16.

The base footwear upper 16 is created by applying the thermoplastic filament 18 onto the footwear last 22, 122 to form a plurality of path segments 24 in the form of loops 26 on the footwear last 22, 122 along an application path 28 (cf. figure 12). With reference to figures 8 and 10, the application path 28 is considered or scanned by the handling unit 46, which moves the footwear last 22, 122 relative to the stationary filament discharge nozzle 74. Since the thermoplastic filament 18 is ejected in helical form, as described previously, the plurality of loops 26 is formed along the application path 28 as depicted in figure 12, which shows two parallel sections of the application path 28 and how they and the loops 26 overlap. Thus, the loops 26 are laid on top of each other, wherein at crossings 48 of the loops 26 the loops 26 are fused to each other, thereby creating a thermoplastic layer 94 on the footwear last 22, 122.

With reference to figure 10, where, as an example, only two sections of the application path 28 are shown, the application path 28 circumvents the footwear last 22, 122 in a multitude of sections, thereby forming the base footwear upper 16. Thus, the application path 28 forms a kind of helix around the footwear last 22, 122.

The thermoplastic filament 18 is applied onto the footwear last 22, 122 to form a uniform layer thickness of 0.5 mm or less. This saves material and weight.

In order to establish connection with the sole unit 80, the thermoplastic filament 18 is not only applied to the footwear last 22, 122 but also to a side surface of the sole unit 80. The sole unit 80 is at least partly pre-heated, in particular at least in portions facing the textile footwear upper in the final product, to improve bonding of the thermoplastic filament 18 with the sole unit 80, in particular by the direct heat unit 105.

Returning to figure 9, sub-step S40 is optional and may be omitted for some articles of footwear. Sub-step S40 runs at least partly parallel to sub-step S30 and comprises varying, based on the filament application data, at least one application path parameter during application of the thermoplastic filament 18 onto the footwear last 22, 122 for creating at least one specific property in at least one specific area of the textile footwear upper. This is further depicted in figure 11 which shows a three-dimensional schematic of the partly finished base footwear upper 16 in the process of being finalized on the footwear last 22, 122.

The at least one application path parameter may be an application speed of applying the thermoplastic filament 18 onto the footwear last 22, 122 along the application path 28. This is visualized in figure 11 by the length of the arrows along the application path 28, a longer distance between the arrowheads indicating a higher speed. The course of the application path 28 in the embodiment of figure 11 is the same as the one in the embodiment of figure 10. However, the application speed is increased in the specific area 36, namely in an outer side section 58. With reference to figure 12 this leads to a higher average loop distance 60 between neighboring loops 26 in the specific area 36. In doing so, a higher flexibility and breathability may deliberately be achieved in the specific area 36 of the article of footwear 78, 178. In case the average loop distance 60 is reduced in the specific area 36, for example by reducing the application speed, a stiffer characteristic, a higher durability and/or a wadding may be achieved in the specific area 32.

Although the outer side section 58 is mentioned as the specific area 36, the skilled person will understand that any section of the base footwear upper 16 may be applicable for increasing flexibility and/or breathability as disclosed herein, depending on application and/or customer demands.

At the end of sub-step S30 and possibly S40 the thermoplastic filament 18 is applied onto the footwear last 22, 122 so as to form the thermoplastic layer 94. The base footwear upper 16 is connected to the sole unit 80, thereby forming a precursor article of footwear. However, this precursor article of footwear may already be a full-fledged article of footwear and may possibly be sold, too.

Returning again to figure 9, optional sub-step S50 comprises applying, based on the filament application data, a second thermoplastic filament 30 onto the thermoplastic filament 18 and/or the base footwear upper 16 for creating at least one specific property in at least one specific area, thereby at least partially forming the textile footwear upper 12.

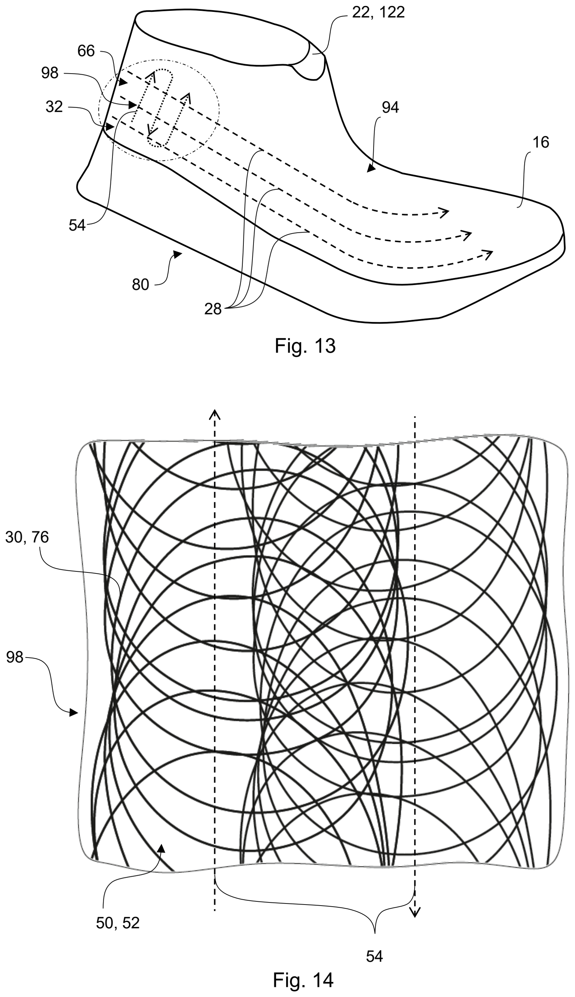

Figure 13 depicts a three-dimensional schematic of sub-step S50 for creating the textile footwear upper 12 for the article of footwear 78 of figure 1.

In sub-step S50 the second thermoplastic filament 30 is applied as a plurality of second path segments 50, namely as a plurality of second loops 52, along a second application path 54 in the specific area 32, which is also shown in the enlarged view of figure 14. The resulting structure is quite similar to the one shown in figure 12 for the thermoplastic filament 18. Here, the specific area 32 is the heel section 66, however any other section of the textile footwear upper 12 would also be applicable, in particular depending on demands.

The second thermoplastic filament 30 is applied as to form a second thermoplastic layer 98 above the thermoplastic layer 94, wherein the second thermoplastic layer 98 is fixed to the thermoplastic layer 94 in the specific area 32. The thermoplastic layer 94 and the second thermoplastic layer 98 are fused to each other. In order to improve the connection between the thermoplastic layer 94 and the second thermoplastic layer 98, the footwear last 22, 122 may be heated before or during application of the second thermoplastic filament 30, for example via a heating element embedded in the footwear last 22, 122 and/or by the direct heat unit 105.

The second thermoplastic filament 30 is applied in the specific area 32 in the form of meanders. The second thermoplastic filament 30 comprises straight sections that are connected to each other at their ends so as to form a continuous entity. In the specific area 32 the straight sections of the second application path 54 are angled with respect to underlying sections of the application path 28. Specifically, the straight sections of the thermoplastic filament 30 are essentially perpendicular to the underlying sections of the thermoplastic filament 18, however any other angle is also conceivable. Alternatively, the second thermoplastic filament 30 could also be applied in the specific area 32 in the form of a spiral or any other applicable shape.

The thermoplastic filament 18 and the second thermoplastic filament 30 are made from the same material and are parts of a common continuous thermoplastic filament 76. That is, after creating the base footwear upper 16 in sub-step S30 and possibly S40 by depositing the thermoplastic filament 18, which is part of the continuous thermoplastic filament 76, the process directly continues with sub-step S50 and applying the second thermoplastic filament 30, which is also part of the continuous thermoplastic filament 76, in the specific area 32.

The second thermoplastic filament 30 is applied in the specific area 32 to form a layer thickness between 0.5 mm and 2 mm, thereby strengthening, stiffening and plating the specific area 32, in this case the heel section 66. Furthermore, a distinct aesthetic effect may be achieved, in particular by a specific course of the second application path 54.

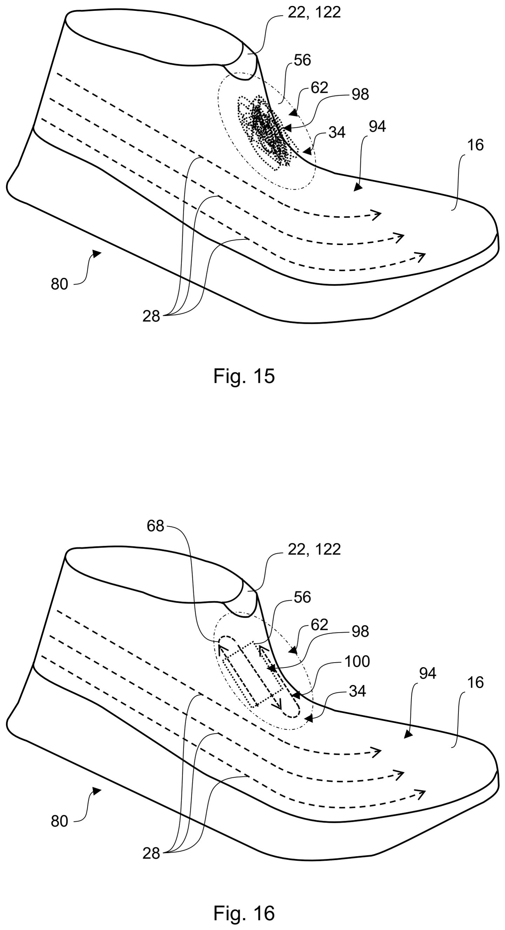

Figures 15 and 16 depict three-dimensional schematics of sub-step S50 for creating the textile footwear upper 112 for the article of footwear 178 of figure 2.

In sub-step S50 the second thermoplastic filament 30 is applied as a wadding 56 in a specific area 34 (cf. figure 15) by increasing the distance between the footwear last 22, 122 and the filament discharge nozzle 74 during deposition. Here, the specific area 34 is the instep section 62, however any other section of the textile footwear upper 112 would also be applicable, in particular depending on demands. The movement pattern may be used to identify the specific area 34. For example, load data and/or deformation data may be derived from the movement pattern. In the present example, the load data and/or the deformation data is indicative of a specific load and/or deformation in the specific area 34. Here, may be derived from the movement pattern a high load in the specific area 34, which is why the wadding 56 is applied.

Furthermore, the optional third thermoplastic filament 44 is applied as a plurality of third path segments, namely as a plurality of third loops, along a third application path 68 onto the thermoplastic filament 18 and the second thermoplastic filament 30 in the specific area 34. This is shown in figure 16. For the sake of clarity, the wadding 56 is herein schematically depicted as a rectangle.

The third thermoplastic filament 44 is applied in the specific area 34 in the form of meanders. Alternatively, the third thermoplastic filament 44 could also be applied in the specific area 34 in the form of a spiral or any other applicable shape.

The second thermoplastic filament 30 is applied as to form a second thermoplastic layer 98 above the thermoplastic layer 94, wherein the second thermoplastic layer 98 is fixed to the thermoplastic layer 94 in the specific area 34. The third thermoplastic filament 44 is applied as to form a third thermoplastic layer 100 above the second thermoplastic layer 98, wherein the third thermoplastic layer 100 is fixed to the thermoplastic layer 94 and the second thermoplastic layer 98 in the specific area 34. Thus, the thermoplastic layer 94 and the third thermoplastic layer 100 provide a pocket for the second thermoplastic layer 98 in order to protect the wadding 56.

The thermoplastic layer 94, the second thermoplastic layer 98 and the third thermoplastic layer 100 are fused to each other. In order to improve the connection between them, the footwear last 22, 122 is heated before or during application of the second thermoplastic filament 30 and the third thermoplastic filament 44, for example via a heating element embedded in the footwear last 22, 122 and/or by the direct heat unit 105.

The thermoplastic filament 18 and the second thermoplastic filament 30 are made from different materials. The thermoplastic filament 18 and the third thermoplastic filament 44, on the other hand, are made from the same material. Thus, while applying the filaments, 18, 30, 68, the polymer composition is changed for applying the second thermoplastic filament 30.

The second thermoplastic filament 30 is applied in the specific area 34 with a layer thickness between 0.5 mm and 2 mm, thereby cushioning and thermally insulating the specific area 34, in this case the instep section 62. Furthermore, a distinct aesthetic effect may be achieved, in particular by a specific course of the third application path 68.

Figure 17 generally shows specific areas 32, 34, 36, 38, 40 of the base footwear upper 16 which could be targets for the application of specific properties in a three-dimensional schematic view. The specific areas 32, 34, 36, 38, 40 may be derived from the movement pattern. Said differently, the load data and/or the deformation data may be derived from the movement pattern for forming the textile footwear upper 12, and the load data and/or the deformation data is indicative of at least one of the specific areas 32, 34, 36, 38, 40. The deriving of the load data and/or the deformation data may be a step of the method.

The specific areas 32, 34, 36, 38, 40 may comprise the outer side section 58, the instep section 62, the heel section 66, a toe section 70, and/or an ankle section 72. Additionally, any other applicable area of the base footwear upper 16 may be envisaged as specific area, in particular depending on demands.

The specific properties may comprise one or any combination of strengthening, stiffening, protective plating, cushioning, thermal insulation, higher flexibility, higher breathability, entrance enhancement, and/or aesthetic effect.

The specific properties may be achieved, as outlined above, by varying at least one application path parameter during application of the thermoplastic filament 18 onto the footwear last 22, 122 in the specific area 32, 34, 36, 38, 40. Alternatively, or additionally, the specific properties may be achieved, as explained above, by applying the second thermoplastic filament 30 and possibly the third thermoplastic filament 44 onto the thermoplastic filament 18 and/or possibly the second thermoplastic filament 30 in the specific area 32, 34, 36, 38, 40.

Another embodiment is shown in Figure 18. This figure depicts the article of footwear 278 mentioned before, which comprises a textile footwear upper 212. The article of footwear 278 was manufactured using the same base footwear upper 16 and the same sole 80 unit also used in the previous embodiments. The article of footwear 278 is custom-made for the same individual as the articles of footwear 78, 178 depicted in figures 1 and 2, using the same footwear last 22, 122. However, the article of footwear 278 has a different diversification structure 242.

When manufacturing the article of footwear 278, in sub-step S50 the second thermoplastic filament 30 is applied as a wadding 156 in the specific area 38, namely in the toe section 70 of the textile footwear upper 212. However, unlike the embodiment of figure 2, 15 and 16, the wadding 156 is left uncovered, giving a distinctive appearance.

Referring to figure 9, the optional sub-step S60 comprises fixing at least one first element to the footwear last 22, 122 and/or to the thermoplastic filament 18 and/or the base footwear upper 16 for creating at least one specific property in at least one specific area of the textile footwear upper 12, 112, 212, thereby at least partially forming the textile footwear upper 12, 112, 212, wherein the fixing is based on the movement pattern and/or the load data and/or deformation data. Sub-step S60 may be performed prior to, parallel to and after step S50 or step S30. The specific property may be as explained for example for step S50, and the specific area may be determined as explained for step S50, for example. Therefore, the specific area may be one of the specific areas 32, 34, 36, 38, 40.

In an optional step S60 one or more first elements 21 may be applied to the footwear last 22, 122. The one or more first elements 21 may be glued and/or pinned and/or magnetically attached to the footwear last 22, 122, or fastened to the footwear last 22, 122 using any conceivable method. The one or more first elements 21 may, for example, be put into one or more recesses on a surface of the footwear last 22, 122 (not shown).

The footwear manufacturing sub-system 82 may comprise a pick-and-place robot (not shown) which can pick up the one or more first elements 21 and apply them to the footwear last 22, 122. Alternatively, the one or more first elements 21 may be manually applied to the footwear last 22, 122.

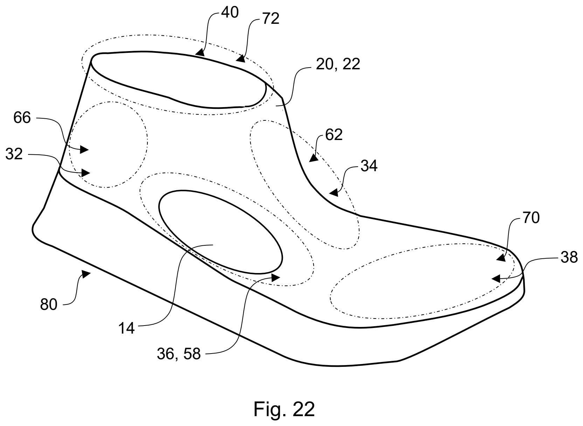

The one or more first elements 21 may be applied to a specific area, for example, at an outer side section 58, an instep section 62, a heel section 66, a toe section 70, and/or an ankle section 72 of the footwear last 22 (cf. figure 17). Figure 22 shows an example, where one first element 21 is fixed to the footwear last 22, 122 in its outer side section 58 based on the movement pattern. For example, if the movement pattern indicates a high load on the outer side section 58, the first element 21 may comprise a wadding element and/or a padding element and/or a strengthening element and/or a stiffening element.

The one or more first elements 21 may comprise a climate control element, in particular a functional membrane, a watertight element, and/or a thermal insulating element, a cushioning element, a padding element, a strengthening element, a stiffening element, a shoe closing element, a tag, a diversification element, a signal element, an entrance enhancement element, a lug, a flap, a tongue, a cuff, and/or a collar.

Depending on the order of step S60 relative to the other steps, the thermoplastic filament 18 and/or the second thermoplastic filament 30 and/or the third thermoplastic filament 44 may be applied onto the one or more first elements 21, or vice versa, along the application path 28, thereby forming a textile footwear upper 12, 112, 212. Thus, the one or more first elements 21 may be connected, namely fused, with the first thermoplastic filament 18, the second thermoplastic filament 30 and/or the third thermoplastic filament 44 and/or the base footwear upper 16.

Returning to figure 9, sub-step S70 comprises finalizing the article of footwear 78, 178, 278. In sub-step S70 the article of footwear 78, 178, 278 may be dried and/or cured to fuse the thermoplastic filaments 18, 30, 44, for example by air blowing or in a controlled atmosphere. A print may be applied to the article of footwear 78, 178, 278, in particular to the textile footwear upper 12, 112, 212 and/or the sole unit 80. The article of footwear 78, 178, 278 may be plasma treated prior to applying the print. Furthermore, the article of footwear 78, 178, 278 may be dried and/or cured after printing. Finally, the article of footwear 78, 178, 278 may be removed from the footwear last 22, 122 and packaged. All these processing steps in sub-step S70 may be conducted by respective manufacturing units of the footwear manufacturing sub-system 82 (not shown). These manufacturing units may be furnished with the footwear last 22, 122 and any article fixed thereon by the handling unit 46.

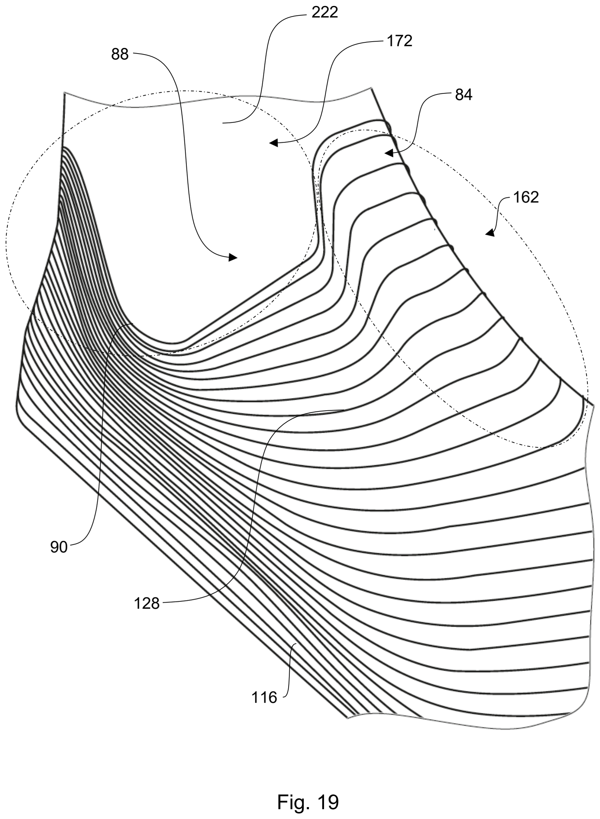

Figure 19 shows an alternative base footwear upper 116 in a schematic three-dimensional view. The base footwear upper 116 was manufactured for another individual and, therefore, with another footwear last 222. Furthermore, the base footwear upper 116 was manufactured in alternative steps S30 and S40 of the method described above. Herein, the at least one application path parameter is a specific course of an application path 128 while applying the thermoplastic filament 18, which is distinctly different from the application path 28 for forming the base footwear upper 16 of the previous embodiments.

The course of the application path 128 was chosen in an ankle section 172 and instep section 162 to shape a collar 88 of the base footwear upper 116 such as to facilitate entry of a wearer's foot and still hold the foot in place when wearing. In particular, a flap 84 is shaped in the instep section 162 while applying the thermoplastic filament 18 onto the footwear last 222. Furthermore, a collar line 90 of the collar 88 is lowered in the ankle section 172 while applying the thermoplastic filament 18 onto the footwear last 222.

Additionally, as further application path parameter an application speed of applying the thermoplastic filament 18 onto the footwear last 222 along the application path 128 may be changed in certain areas to increase or decrease deposition density for further effects, like increased flexibility and/or breathability.

Figure 20 shows the article of footwear 378 mentioned before, which comprises yet another textile footwear upper 312, in a schematic three-dimensional view. The textile footwear upper 312 is based on yet another base footwear upper 216. The article of footwear 378 was custom-made for the same individual as the articles of footwear 78, 178 of figures 1 and 2, using the same footwear last 22, 122. The textile footwear upper 312 has been formed in alternative steps S30 and S50 of the method mentioned above.

Here, the thermoplastic filament 18 has been applied as to form a thermoplastic layer 92, and the second thermoplastic filament 30 has been applied as to form a second thermoplastic layer 96 above the thermoplastic layer 92. Parts of the thermoplastic layer 92 and the base footwear upper 216 below the second thermoplastic layer 96 are marked by dashed lines in figure 20.

Herein, the thermoplastic filament 18 and the base footwear upper 216 only enclose a forefoot section of a foot accommodation space of the textile footwear upper 312, in particular in the manner of a slipper. The second thermoplastic filament 30, on the other hand, completely encloses the foot accommodation space.

The second thermoplastic layer 96 is moveable relative to the underlying thermoplastic layer 92 in a specific area 132. In this specific area 132, which partly corresponds to an instep section, a tongue 86 is formed by the base footwear upper 216 which extends farther out than the second thermoplastic layer 96 and may thus be grabbed while entering the article of footwear 378. The second thermoplastic layer 96 is fixed to the underlying thermoplastic layer 92 in a specific area 134 corresponding to the forefoot section. This leads to high stiffness in the forefoot section, increased wear comfort and good entrance behavior.

The second thermoplastic layer 96 and the underlying thermoplastic layer 92 may be kept moveable in the specific area 132 by using an intermediate blocking layer (not shown) on top of the thermoplastic layer 92 when applying the second thermoplastic layer 96. The intermediate blocking layer may be removed after the second thermoplastic layer 96 has hardened and fused.

Figure 21 schematically shows part of a hindfoot section of yet another a textile footwear upper 412 for an article of footwear in a three-dimensional view. The textile footwear upper 412 is based on yet another base footwear upper 316. The textile footwear upper 412 has been formed with for another individual and with an alternative footwear last (not shown), and in alternative steps S30 and S50 of the method mentioned above.

Here, the thermoplastic filament 18 has been applied as to form a thermoplastic layer 92, and the second thermoplastic filament 30 has been applied as to form a second thermoplastic layer 96 above the thermoplastic layer 92. Parts of the thermoplastic layer 92 below the second thermoplastic layer 96 are marked by dashed lines in figure 21.

The thermoplastic filament 18 and the second thermoplastic filament 30 together enclose a heel section 166 of the textile footwear upper 412. The inner thermoplastic layer 92 is configured to reach higher on a wearer's Archilles tendon than the outer second thermoplastic layer 96. Here, the thermoplastic layer 92 forms a flap 184, which gets close to the wearer's Archilles tendon, and which may also be grabbed when entering the article of footwear.

In the heel section 166, the second thermoplastic layer 96 is moveable relative to the underlying thermoplastic layer 92. This leads to increased wear comfort and good entrance behavior.

It should be noted that in variants of the method disclosed herein, one or more of the steps and/or sub-steps of the method according to figure 9 may be omitted. As already outlined, sub-step S40 is optional. Furthermore, sub-step S50 could be skipped, so that the article obtained in sub-steps S10, S20 and S30 and optionally sub-step S40 could be sold as an article of footwear. However, sub-step S70 could still be applied to this article.

Furthermore, the method disclosed herein could also be envisaged with different sole units for different articles of footwear. Herein, the employed sole units may have similar or the same outer dimensions and may fit on the same footwear last.

In further variants of the method of figure 9, a sole unit may not be provided in advance and may not be fastened to a footwear last. Instead, a textile footwear upper may be first created and a sole unit may be directly injected to an underside of the textile footwear upper.

The movement patter and/or the foot shape and/or the footwear last and/or the filament application data may be kept for future manufacturing of a further bespoke article of footwear for the individual. In this case, steps S1, possibly S3 and S5 may be omitted and the article of footwear made readily available to the individual. In particular the digital date representative of the foot shape may be stored for later use.

Various modifications to the embodiments described are possible and will occur to those skilled in the art without departing from the invention, which is defined by the following claims.

## Claims

1. A method for manufacturing a textile footwear upper (12, 112, 212, 312, 412) for a bespoke article of footwear (78, 178, 278, 378), comprising the steps of:
- obtaining a movement pattern of an individual, in particular of an individual's foot (11); and
- applying, based on the movement pattern, a thermoplastic filament (18) onto a footwear last (22, 122, 222) to form a plurality of path segments (24), in particular loops (26), on the footwear last (22, 122, 222) along an application path (28, 128), thereby at least partially forming the textile footwear upper (12, 112, 212, 312, 412).

2. The method according to claim 1, wherein the movement pattern is indicative of at least one area of specific load on and/or specific deformation of the individual's foot (11) during a movement.

3. The method according to claim 1 or 2, further comprising the step of:
- deriving load and/or deformation data from the movement pattern for forming the textile footwear upper (12, 112, 212, 312, 412), wherein the load and/or deformation data is indicative of at least one area of specific load on and/or specific deformation of the individual's foot (11).

4. The method of claim 2 or 3, wherein the at least one area of specific load comprises an area of increased load on the foot (11) and/or at least one area of reduced load on the foot (11) and/or at least one area of malposition of the foot (11) and/or at least one area of specific movement of the foot (11).

5. The method according to any one of claims 2 to 4, wherein the at least one area of specific deformation of the individual's foot (11) comprises an area of increased deformation of the foot (11) and/or at least one area of reduced deformation of the foot (11) and/or at least one area of malposition of the foot (11) and/or at least one area of specific movement of the foot (11).

6. The method according to any one of claims 3 to 5, wherein deriving load and/or deformation data comprises comparing the movement pattern to at least one reference movement pattern, wherein preferably the at least one reference movement pattern is based on experience data, in particular medical experience data.

7. The method according to any one of claims 3 to 6, wherein deriving load and/or deformation data comprises analyzing the movement pattern using an artificial intelligence.

8. The method according to any one of the preceding claims, comprising the step of:
- creating filament application data for forming the textile footwear upper (12, 112, 212, 312, 412), wherein when creating the filament application data, the movement pattern is considered.

9. The method according to claim 8 and any one of claims 3 to 7, wherein when creating the filament application data, the load and/or deformation data is considered.

10. The method according to any one of claims 8 or 9, wherein applying the thermoplastic filament (18) onto the footwear last (22, 122, 222) comprises varying, based on the filament application data, at least one application path parameter during application of the thermoplastic filament (18) onto the footwear last (22, 122, 222) for creating at least one specific property in at least one specific area (32, 34, 36, 38, 40, 132, 134) of the textile footwear upper (12, 112, 212, 312, 412).

11. The method according to any one of claims 8 to 10, comprising the step of:
- applying, based on the filament application data, a second thermoplastic filament (30) onto the thermoplastic filament (18) and/or the footwear upper (12, 112, 212, 312, 412) for creating at least one specific property in at least one specific area (32, 34, 36, 38, 40, 132, 134), thereby at least partially forming the textile footwear upper (12, 112, 212, 312, 412).

12. The method according to any one of the preceding claims, further comprising:
- fixing at least one first element (21) to the footwear last (22, 122, 222) and/or to the thermoplastic filament (18) for creating at least one specific property in at least one specific area (32, 34, 36, 38, 40, 132, 134) of the textile footwear upper (12, 112, 212, 312, 412), thereby at least partially forming the textile footwear upper (12, 112, 212, 312, 412), wherein the fixing is based on the movement pattern and/or the load and/or deformation data.

13. The method according to any one of the preceding claims, comprising the step of:
- creating an individual footwear last (22, 122, 222) based on the movement pattern, wherein when applying the thermoplastic filament (18), the thermoplastic filament (18) is applied to the individual footwear last (22, 122, 222).

14. A bespoke article of footwear (78, 178, 278, 378), in particular a sports and/or leisure shoe, comprising:
- a textile footwear upper (12, 112, 212, 312, 412) being manufactured by a method according to any one of the preceding claims; and
- a sole unit connected to the textile footwear upper (12, 112, 212, 312, 412).

15. A manufacturing system (10) for manufacturing a bespoke article of footwear (78, 178, 278, 378), in particular according to claim 14, the manufacturing system (10) being configured to execute a method according to any one of claims 1 to 13.
